# EUROPÄISCHE PATENTSCHRIFT

(11) **EP 1 104 839 B1**
(45) Veröffentlichungstag und Bekanntmachung des Hinweises auf die Patenterteilung: **26.01.2005**
(21) Anmeldenummer: 00811121.3
(22) Anmeldetag: 24.11.2000
(51) Int. Cl.: F01N 7/18, B60K 13/04

(54) **Abgasanlage für ein Kraftfahrzeug, Kraftfahrzeug und Verfahren zur Herstellung einer Abgasanlage**
Exhaust gas apparatus for a vehicle , vehicle and process for manufacturing of such an apparatus
Dispositif d'échappement pour un véhicule, véhicule et procédé de fabrication de ce dispositif

(30) Priorität: 01.12.1999 CH 219499
(43) Veröffentlichungstag der Anmeldung: 06.06.2001
(73) Patentinhaber: SCAMBIA INDUSTRIAL DEVELOPMENTS AKTIENGESELLSCHAFT, 9494 Schaan (LI)
(72) Erfinder: Steenackers, Pieter Delfina, Dr., 3030 Heverlee (BE); Alexnat, John W. Jörg, 3700 Tongeren (BE)
(74) Vertreter: Eder, Carl E.

(56) Entgegenhaltungen:
- EP-A- 0 807 749
- DE-U- 29 711 764
- US-A- 4 201 048
- US-A- 5 765 878

## Beschreibung

Die Erfindung betrifft eine Abgasanlage für ein Kraftfahrzeug mit einem Fahrzeugkörper und einem Verbrennungsmotor. Die Abgasanlage besitzt einen zum Verbinden mit dem Verbrennungsmotor bestimmten Auspuff, der mindestens ein Gehäuse eines Schalldämpfers und/oder Katalysators mit einem im Wesentlichen eine Materialdicke von höchstens 1 mm aufweisenden Gehäuse-Mantel sowie zwei Gehäuse-Enden aufweist, von denen mindestens eines starr mit einem metallischen, eine Materialdicke von höchstens 1 mm aufweisenden Rohr zum Leiten des Abgases verbunden ist. Die Abgasanlage besitzt ferner Haltemittel zum Halten des Auspuffs am Fahrzeugkörper.

Die Abgasanlage ist zum Beispiel für einen Personenkraftwagen vorgesehen, sie kann jedoch eventuell auch für ein anderes Kraftfahrzeug - zum Beispiel einen Lastkraftwagen oder Bus - verwendet werden. Der Verbrennungsmotor kann dabei aus einem Benzin- oder Dieselmotor bestehen.

Aus der EP 0 807 749 A sind Abgasanlagen bekannt, die Rohre, einen Katalysator und mindestens einen Schalldämpfer aufweisen, wobei mindestens eines der Rohre, der Mantel und die Endwände des Gehäuses des bzw. jedes Schalldämpfers eine Materialdicke von höchstens 1 mm und vorzugsweise höchstens 0,8 mm besitzen. Dank dieser Leichtbauweise weist eine solche Abgasanlage ein sehr geringes Gewicht auf. Die Abgasanlagen weisen Haltemittel mit Haltern auf, die das Gehäuse jedes Schalldampfers in der Nähe der Gehäuse-Enden mit dem Fahrzeugboden verbinden. Die Halter haben zum Beispiel metallische, durch Punktschweissen oder ein anderes Schweissverfahren am Gehäuse-Mantel befestigte Halteorgane. Wegen der kleinen Materialdicke des Gehäuse-Mantels ist es jedoch schwierig, die Halteorgane stabil am Gehäuse-Mantel anzuschweissen, ohne dass in diesem beim Schweissen oder später bei der Benutzung des Kraftfahrzeugs Risse und/oder Löcher entstehen. Zudem ist normalerweise mindestens ein Teil der Abgasanlage und insbesondere mindestens ein Schalldämpfer auf der untern Seite des Fahrzeugbodens angeordnet. Dabei ist zwischen dem Fahrzeugboden und der Unterlage, auf der das Fahrzeug steht oder fährt, meistens nur wenig Platz vorhanden. Die unten oder oben am Gehäuse-Mantel befestigten Halter beanspruchen jedoch auch eine gewisse Höhe und verkleinern den für den Gehäuse-Mantel verfügbaren Höhenbereich und damit die maximal möglichen Querschnittsabmessungen des Schalldämpfers sowie dessen Schalldämpfung.

Eine aus der DE 297 11 764 U bekannte Abgasanlage besitzt einen Schalldämpfer. Dieser ist an einem seiner Enden mit Haltemitteln befestigt, die zwei aus einer Aluminiumlegierung bestehende, gebogene, einen vollen Querschnitt aufweisende Stangen besitzen. Die erste dieser beiden Stangen hat einen gebogenen Endabschnitt, auf dem zwei ebenfalls gebogene Stahlhülsen sitzen, die mit einer der beiden Endwände des Schalldämpfers verschweisst sind. Der dem gebogenen Endabschnitt abgewandte Endabschnitt der ersten Stange ist durch einen Gummikörper mit einem Endabschnitt der zweiten Stange verbunden. Deren anderer Endabschnitt sitzt in einer Stahlhülse, die an einem Halteelement angeschweisst ist, das seinerseits am Fahrzeugboden befestigt ist.

Die DE 297 11 764 U enthalt keine Angabe uber die Materialdicken der zum Leiten des Abgases dienenden Rohre und des Gehäuses des Schalldämpfers. Es scheint daher plausibel, dass im Stand der Technik übliche, mindestens etwa 1,5 mm betragende Materialdicken vorgesehen waren, so dass der Auspuff ziemlich schwer ist. Es wäre insbesondere auch praktisch fast unmöglich, die auf der ersten Stange sitzenden Stahlhülsen an eine Schalldämpfer-Endwand mit einer weniger als etwa 1,5 mm betragenden Dicke anzuschweissen, ohne dass beim Schweissen oder später bei der Benutzung des Motorfahrzeugs Risse und Löcher im Gehäuse entstehen. Es sei hierzu angemerkt, dass bei der Benutzung des Fahrzeugs, wenn dieses zum Beispiel schnell über ein Loch oder eine Stufe oder dergleichen fährt, sehr grosse ungefähr vertikale Beschleunigungen auf den Auspuff ausgeübt werden können. Ferner sind die Stahlhülsen nur durch Aufpressen auf den Stangen befestigt. Da die Stangen aus einer Aluminiumlegierung bestehen, wäre es auch kaum möglich, die Stahlhülsen mit ihnen zu verschweissen. Da das Gehäuse des Schalldämpfers und damit die an diesem befestigten Stahlhülsen beim Betrieb vorübergehend stark erhitzt werden, finden thermisch verursachte Abmessungsänderungen und Deformationen statt, welche möglicherweise die Verbindung der aufgepressten Hülsen mit der ersten Stange lockern können. Zudem müssen die auf der ersten Stange angeordneten Stahlhülsen gleich wie der sie haltende Endabschnitt der Stangen gebogen werden, was die Herstellung verteuert. Des Weiteren ist zwischen den aus einer Aluminiumlegierung bestehenden Stangen und den Stahlhülsen eine zur Verhinderung der elektrochemischen Korrosion notwendige Isolierschicht oder Isolierfolie angebracht, welche die Herstellung verteuert und die Festigkeit und Dauerhaftigkeit der Pressverbindung beeinträchtigen kann. Die aus der DE 297 11 764 U bekannten Haltemittel sind auch kaum zur Montage eines Schalldämpfers geeignet, der sich im Tunnel eines Fahrzeugbodens befindet.

Aus der DE 30 26 730 A und der DE 31 37 746 A sind Abgasanlagen bekannt, bei denen das Gehause eines Schalldämpfers oder Rohre des Auspuffs mit mindestens einem Gummiring am Fahrzeugkörper aufgehängt sind. Wenn eine Kraft auf einen derart gehaltenen Teil eines Auspuffes ausgeübt wird, stellen die Gummiringe einer Auslenkung des Auspuffs aus dessen Ruhestellung zuerst nur einen sehr kleinen Widerstand entgegen. Erst wenn die Auslenkungen der Auspuffteile Grenzwerte von etwa 1 cm bis 2 cm oder noch mehr erreichen, steigt der von den Gummiringen erzeugte Widerstand sprunghaft an. Haltemittel mit mindestens einem Gummiring haben deshalb den Nachteil, dass der bzw. jeder aufgehängte Teil insbesondere nach oben und auch in allen ungefähr horizontalen Richtungen innerhalb gewisser, normalerweise mindestens 1 cm oder mehr betragender Bereiche fast frei beweglich ist. Auf diese Weise aufgehängte Auspuffteile müssen daher grosse Abstände vom Fahrzeugkörper und - bei der Anordnung im Tunnel des Fahrzeugbodens - insbesondere von den Wänden des Tunnels haben. Ferner müssen derart aufgehängte Auspuffteile und die mit diesen verbundenen Teile dicke Wände haben, damit der Auspuff eine ausreichende Festigkeit erhält.

Der vorliegenden Erfindung liegt nun die Aufgabe zu Grunde, eine Abgasanlage zur Verfügung zu stellen, die Nachteile der bekannten Abgasanlagen vermeidet und deren Auspuff mit den Haltemitteln insbesondere auch bei dünnwandiger Ausbildung des bzw. jedes Gehäuse-Mantels und mindestens eines mit dem Gehäuse verbundenen Rohres ohne Beschädigung des bzw. jedes Gehäuses dauerhaft mit dem Fahrzeugkörper verbunden werden kann. Ferner soll ermöglicht werden, dass das bzw. mindestens ein Gehäuse gut im Tunnel des Fahrzeugbodens untergebracht werden und dabei eine grosse vertikale Querschnittsabmessung aufweisen kann. Des Weiteren sollen die Haltemittel wirtschaftlich herstellbar sowie montierbar sein und eine gute Schwingungsdämpfung ermöglichen.

Diese Aufgabe wird - ausgehend von dem aus der EP 0 807 749 A bekannten Stand der Technik - erfindungsgemäss durch eine Abgasanlage mit den Merkmalen des Anspruchs 1 gelöst. Ebenfalls Gegenstand der Erfindung ist ein mit einer solchen Abgasanlage versehenes Kraftfahrzeug mit den Merkmalen des Anspruchs 13 und ein Verfahren zur Herstellung einer solchen Abgasanlage mit den Merkmalen des Anspruchs 16.

Vorteilhafte Ausgestaltungen des Erfindungsgegenstands gehen aus den abhängigen Ansprüchen hervor.

Eine erfindungsgemässe Abgasanlage weist mindestens einen Schalldämpfer und/oder Katalysator auf, dessen Gehäuse einen Mantel mit einer im Wesentlichen 1 mm oder weniger betragenden Materialdicke bzw. Wanddicke besitzt. Ferner hat mindestens eines und vorzugsweise jedes mit dem Gehäuse verbundene Rohr sowie vorzugsweise auch jede Endwand des Gehäuses im Wesentlichen eine Materialdicke bzw. Wanddicke von höchstens 1 mm. Dabei betragen die Materialdicken des Gehäuse-Mantels, der Gehäuse-Endwände und des bzw. jedes genannten Rohres vorzugsweise im Wesentlichen höchstens 0,8 mm und zum Beispiel 0,5 mm bis 0,7 mm oder eventuell sogar noch weniger als 0,5 mm. Die Materialdicke bzw. Wanddicke des bzw. jedes Verstärkungselements beträgt zweckmässigerweise ebenfalls höchstens 1 mm, vorzugsweise höchstens 0,8 mm und zum Beispiel ungefähr 0,5 mm bis 0,7 mm.

Gemäss der Erfindung ist mindestens eines der metallischen Halteorgane und zum Beispiel jedes Halteorgan der Haltemittel über ein Verstärkungselement an einem Rohr oder eventuell über ein Verstärkungselement an einem Gehäuse-Mantel befestigt, dessen Materialdicke höchstens 1 mm und zum Beispiel höchstens 0,8 mm beträgt. Gemäss der Erfindung ist das bzw. jedes Verstärkungselement derart an einem Rohr oder eventuell am Gehäuse-Mantel des bzw. eines Gehäuses befestigt, dass der das Verstärkungselement haltende Auspuffteil, d.h. das Rohr, bzw. der Gehäuse-Mantel, vom Verstärkungselement im Querschnitt mindestens annähernd und vorzugsweise vollständig umschlossen wird. Das Verstärkungselement vergrössert die Fläche, über welche Kräfte zwischen dem mit dem Verstärkungselement versehenen Rohr oder Gehäuse-Mantel und dem mit dem Verstärkungselement verbundenen Halteorgane übertragen werden können. Das Rohr bzw. der Gehäuse-Mantel wird durch das Verstärkungselement derart verstärkt, dass das Rohr bzw. der Gehäuse-Mantel weder durch das Befestigen des Halteorgans noch nachher durch die bei der Benutzung des Kraftfahrzeugs auf den Auspuff ausgeübten Kräfte beschädigt wird. Das Verstärkungselement gewährleistet insbesondere, dass trotz der geringen Materialdicke des Rohrs bzw. Gehäuse-Mantels keine Risse und Lecks im Rohr bzw. Gehäuse-Mantel entstehen. Die Erfindung ermöglicht also, den Auspuff sehr leicht auszubilden und ihn trotzdessen gut und dauerhaft mit dem Fahrzeugkörper zu verbinden.

Das bzw. jedes Verstärkungselement ist vorzugsweise im Wesentlichen hülsenförmig und besteht zum Beispiel aus einer einstückigen Hülse, die entlang ihrem Umfang in sich geschlossen ist und das Rohr bzw. den Gehäuse-Mantel im Querschnitt vollständig umschliesst und entlang ihrem Umfang unterbruchslos zusammenhängt. Das bzw. jedes Verstärkungselement ist zum Beispiel auf das Rohr bzw. den Gehäuse-Mantel aufgepresst und also durch eine Press-Verbindung mit diesem verbunden. Das bzw. jedes Verstärkungselement kann ferner zusätzlich oder stattdessen durch mindestens eine Schweiss-Verbindung oder mindestens eine Hartlöt-Verbindung oder durch plastisches Verformen, beispielsweise durch Crimpen und/oder Sicken-Bildung, oder eventuell durch mindestens eine Kleb-Verbindung unlösbar am Rohr bzw. Gehäuse-Mantel befestigt sein. Das bzw. jedes mit Hilfe eines Verstärkungselements mit einem Rohr oder Gehäuse-Mantel verbundene, metallische Halteorgan ist vorzugsweise durch Schweissen oder Hartlöten oder eventuell durch Kleben unlösbar mit dem Verstärkungselement verbunden.

Bei einer besonders vorteilhaften Ausgestaltung der Erfindung sind dem bzw. mindestens einem und beispielsweise jedem der Gehäuse zwei Halter mit je einem metallischen Halteorgan zugeordnet, wobei jedes Halteorgan in der Nähe von einem der Gehäuse-Enden über ein Verstärkungselement mit einem am betreffenden Gehäuse-Ende befestigten Rohr verbunden ist. Das Gehäuse kann dann frei von Haltemitteln sein. Wenn eines der an einem Gehäuse befestigten Rohre sehr kurz ist und zum Beispiel eine Länge hat, die nur wenig grösser als die Breite eines Halteorgans ist, kann dieses Rohr eventuell eine Wand- bzw. Materialdicke von mehr als 0,8 mm und sogar mehr als 1 mm haben. In einem solchen Fall kann eines der Halteorgane statt über ein Verstärkungselement direkt und unmittelbar an diesem Rohr befestigt werden. Wenn der Auspuff zwei entlang dem Strömungsweg des Abgases in sehr kleinem Abstand aufeinander folgende Gehäuse hat, die durch ein sehr kurzes Rohr miteinander verbunden sind, kann eventuell ein für diese zwei Gehäuse gemeinsamer Halter mit einem Halteorgan vorgesehen werden, das über ein hülsenförmiges Verstärkungselement oder direkt an dem die beiden Gehäuse verbindenden Rohr befestigt ist. Bei einer solchen Ausbildung kann der die beiden Gehäuse aufweisenden Auspuffteil mit drei Haltern montiert werden, von denen jeder ein mit einem Rohr verbundenes Halteorgan aufweist. Dadurch, dass die Haltemittel mit Rohren verbunden sind und nicht am Gehäuse eines Schalldämpfers und/oder Katalysators angreifen müssen, kann beispielsweise ein Gehause in einem Tunnel mit vorgegebenen Querschnittsabmessungen eine grössere vertikale Querschnittsabmessung haben, als wenn Haltemittel am Gehäuse-Mantel angreifen würden.

Das bzw. jedes mit Hilfe eines Verstärkungselements befestigte Halteorgan kann zum Beispiel durch mindestens eine Schweiss-Verbindung oder mindestens eine Hartlöt-Verbindung mit dem Verstärkungselement verbunden sein. Dabei sind vorzugsweise zwei als Verbindungen dienende Schweiss-Nähte oder Hartlöt-Nähte vorhanden, die ungefähr quer zu dem Abgas leitenden Rohr des Auspuffs bzw. dem Gehäuse-Mantel entlang von Halteorgan-Abschnitten verlaufen sowie in der Längsrichtung des Rohrs und also entlang dem allgemeinen Strömungsweg des Abgases gegeneinander versetzt sind. Wenn ein Halteorgan durch Schweissen mit dem zugeordneten Verstärkungselement verbunden wird, können das Halteorgan, das Verstärkungselement und das Rohr des Auspuffs durch mindestens eine gemeinsame Schweiss-Verbindung bzw. Schweiss-Naht miteinander verbunden sein, die das hülsenförmige Verstärkungselement durchdringt und die bei der Herstellung der Abgasanlage in einem einzigen Schweissvorgang erstellt wurde.

Wenn das bzw. jedes Halteorgan durch Hartlöten am zugeordneten Verstärkungselement befestigt wird, erfolgt das Hartlöten vorzugsweise nicht in einem Ofen, sondern mit Hilfe einer Vorrichtung, die eine Elektrode zur Erzeugung eines elektrischen Lichtbogens aufweist. Die Elektrode kann zum Beispiel mindestens zum Teil aus Hartlot bestehen, so dass dieses beim Hartlöten von der Elektrode abgeschmolzen werden kann. Alternativ besteht die Möglichkeit, eine nichtschmelzende Elektrode zu verwenden und einen separaten, mindestens zum Teil aus Hartlot bestehenden Draht zuzuführen und diesen im Lichtbogen zu schmelzen. Die zum Hartlöten benutzte Vorrichtung kann ähnlich ausgebildet sein wie eine elektrische Lichtbogen-Schweissvorrichtung und zum Beispiel auch noch Mittel aufweisen, um eine den Lichtbogen umschliessende Schutzgas-Hülle zu erzeugen. Eventuell kann zum Hartlöten eine Vorrichtung verwendet werden, die anstelle einer Elektrode einen Gasbrenner besitzt, der analog wie beim Autogenschweissen eine Flamme erzeugt. Im übrigen gilt das vorgängig in Bezug auf die Verbindung eines Halteorgans und eines Verstärkungselements mit einem Rohr des Auspuffs Geschriebene in analoger Weise für die allfällige Verbindung eines Halteorgans und eines Verstärkungselements mit einem Gehäuse-Mantel, soweit sich keine Widersprüche ergeben. Sowohl die durch Schweissen als auch eine durch Hartlöten oder eventuell eine durch Kleben erfolgende Verbindung des Halteorgans mit dem Verstärkungselement ermöglichen eine wirtschaftliche und dauerhafte Befestigung des Halteorgans, so dass die Abgasanlage nicht nur leicht, sondern auch kostengünstig ist.

Hier sei noch die Normalstellung des Kraftfahrzeugs definiert. Unter dieser wird diejenige Stellung des Kraftfahrzeugs verstanden, in der dieses mit seinen Rädern auf einer ebenen horizontalen Unterlage steht.

Jedes metallische Halteorgan ist vorzugsweise über mindestens teilweise gummielastische Dämpfungselemente mit einem metallischen Verbindungselement verbinden, das mit dem Halteorgan und den Dämpfungselementen zusammen einen Halter bildet und bei der Montage der Abgasanlage am Fahrzeugkörper des Kraftfahrzeugs befestigt wird. Die mindestens teilweise gummielastischen Dämpfungselemente sind schwingungsdämpfend, so dass Vibrationen des Abgassystems nicht auf den Fahrzeugkörper übertragen werden und umgekehrt Erschütterungen desselben nicht voll auf das insbesondere in der Leichtbauweise empfindliche Abgassystem übertragen werden. Diese Dämpfungselemente bestehen beispielsweise mindestens zum Teil aus einem gummielastischen Körper. Die gummielastischen Körper sollen jedoch so steif sein, dass sie durch die beim Fahren des Kraftfahrzeugs auftretenden Beschleunigungen und Kräfte in allen möglichen Richtungen nur wenig deformiert werden. Gemäss einer vorteilhaften Ausgestaltung des erfindungsgemässen Kraftfahrzeuges sind nun die Haltemittel so ausgestaltet, dass jedes Halteorgan mit jedem gummielastischen Körper bei einer Verbindungsstelle verbunden ist, die sich oberhalb der Verbindungsstelle bzw. der Verbindungsstellen befindet, bei der bzw. bei denen der gummielastische Körper mit dem Verbindungselement verbunden ist. Dadurch kann bei geeigneter Anordnung erreicht werden, dass die gummielastischen Körper in der Normalstellung des Kraftfahrzeugs durch das Gewicht des Auspuffs im Wesentlichen nur auf Druck belastet werden und der Auspuff bei einem Bruch des gummielastischen Materials nicht auf die Fahrunterlage fällt, sondern weiterhin durch die Verbindungselemente gestützt wird.

Im Folgenden werden Ausführungsbeispiele der erfindungsgemässen Abgasanlage, des Kraftfahrzeugs und des Verfahrens zur Herstellung der Abgasanlage anhand einer Zeichnung beschrieben. In der Zeichnung zeigt
Fig. 1 einen sehr schematischen Längsschnitt durch ein Kraftfahrzeug,
Fig. 2 eine Schrägansicht von einem Teil eines Schalldämpfers einer erfindungsgemässen Abgasanlage,
Fig. 3 einen Querschnitt durch den Boden des Kraftfahrzeugs entlang der Linie III-III der Fig. 4,
Fig. 4 einen Längsschnitt entlang der Linie IV-IV in der Fig. 3, aber in einem grösseren Massstab als die Fig. 3,
Fig. 5 eine Schrägansicht des Einlass-seitigen Endes eines Schalldämpfers einer Abgasanlage mit anderen Haltemitteln,
Fig. 6 einen Querschnitt durch das mit dem Einlass-seitigen Ende des Schalldämpfers gemäss Fig. 5 verbundene Rohr und den mit diesem verbundenen Halter,
Fig. 7 einen horizontalen Längsschnitt durch das Einlass-seitige Ende des Schalldämpfers gemäss den Figuren 5 und 6 und eine Draufsicht auf den dort angeordneten Halter, in grösserem Massstab als Fig. 6,
Fig. 8 einen vertikalen Schnitt durch einen Teil des mit dem Einlass-seitigen Ende des Schalldämpfers verbundenen Rohrs und durch das mit diesem verbundene Halteorgan, wobei der Schnitt entlang der Achse des Rohrs des Auspuffs verläuft, und
Fig. 9 eine Schrägansicht des Auslass-seitigen Endes des Schalldämpfers gemäss den Figuren 5 bis 7.

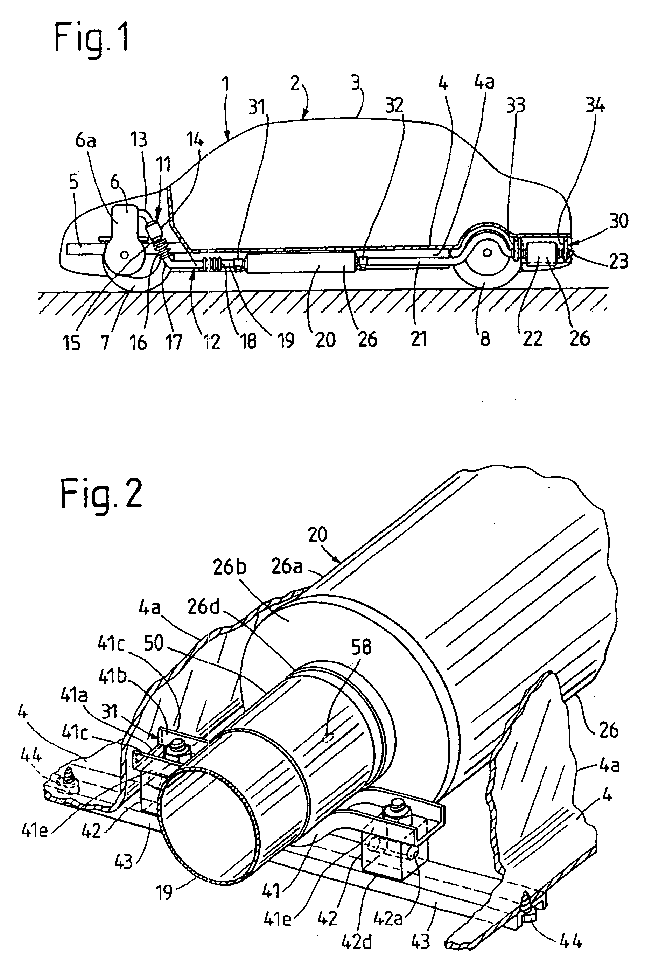

Das schematisch in der Fig. 1 gezeichnete Kraftfahrzeug 1 ist ein Personenkraftwagen und besitzt einen Fahrzeugkörper 2. Dieser weist eine selbsttragende Karosserie 3, einen Fahrzeugboden 4 und ein Gestell 5 auf. Der Fahrzeugkörper 2 hält einen Verbrennungsmotor 6, Vorderräder 7, Hinterräder 8 und eine als Ganzes mit 11 bezeichnete Abgasanlage. Der Verbrennungsmotor 6 besitzt ein schwingungsdämpfend am Gestell 5 befestigtes Motorgehäuse 6a mit mehreren Abgasauslassen, von denen jeder einem Zylinder des Motors zugeordnet ist. Die Abgasanlage 11 besitzt als Hauptbestandteil einen Auspuff 12. Dieser weist verschiedene Auspuffteile zum Leiten des Abgases auf und begrenzt einen Stromungsweg für dieses. Der Auspuff besitzt zum Beispiel in der Stromungsrichtung des Abgases der Reihe nach eine Einlass- und Sammelvorrichtung 13, einen Katalysator 14, eine Verbindung 15, ein erstes elastisch deformierbares Leitungselement 16, ein gebogenes Rohr 17, ein zweites elastisch deformierbares Leitungselement 18, ein kurzes Rohr 19, einen ersten Schalldämpfer 20, ein längeres, gebogenes Rohr 21, einen zweiten Schalldämpfer 22 und ein in die Umgebung mündendes, kurzes Auslassrohr 23. Der Verbrennungsmotor 6 befindet sich beim vorderen Ende des Kraftfahrzeugs 1. Der Auspuff 12 verläuft vom Verbrennungsmotor zum Heck des Kraftfahrzeugs 1 und befindet sich zum grössten Teil unterhalb des Fahrzeugbodens 4. Zur Abgasanlage 11 gehören ferner Haltemittel 30. Diese weisen vier Halter 31, 32, 33, 34 auf, welche die Rohre 19, 21, 23 des Auspuffs 12 mit einem starren Teil des Fahrzeugkörpers 2, nämlich mit dem Fahrzeugboden 4 verbinden. Dabei ist je ein Halter bezüglich der Strömungsrichtung vor und hinter jedem Schalldämpfer 20, 22 sowie in dessen Nähe angebracht, so dass jeder Schalldämpfer über kurze Rohrabschnitte und zwei ihm zugeordnete Halter mit dem Fahrzeugboden verbunden ist.

Die Einlass- und Sammelvorrichtung 13 besitzt einen Auspuffkrümmer, der für jeden Abgasauslass des Motors ein gebogenes Einlassrohr und einen für alle Einlassrohre gemeinsamen Ausgang aufweist. Der Katalysator 14 hat ein starres Gehäuse mit einem Eingang, der starr mit dem gemeinsamen Ausgang der Einlass- und Sammelvorrichtung 13 verbunden ist. Die Einlass- und Sammelvorrichtung 13, das Gehäuse des Katalysators 14 sowie die Rohre 17, 19, 21, 23 und das allenfalls bei der Verbindung 15 vorhandene Rohr bestehen aus metallischen Materialien, beispielsweise rostfreiem Stahl oder eventuell einem anderen Stahl und sind starr. Die Rohre 17, 19, 21 und 23 und eventuell ein allenfalls bei der Verbindung 15 vorhandenes Rohr sind in der Leichtbauweise gefertigt, das heisst sie weisen Wanddicken bzw. Materialdicken von höchstens 1 mm, vorzugsweise höchstens 0,8 mm und zum Beispiel ungefähr 0,5 mm bis 0,7 mm auf. Die verschiedenen zum Leiten des Abgases dienenden Rohre sind, im Querschnitt zum Beispiel, kreisförmig. Die zwei elastisch deformierbaren Leitungselemente 16 und 18 weisen zum Beispiel einen aus rostfreiem Stahl bestehenden, flexiblen, biegbaren, verlängerbaren und verkürzbaren Wellenbalg auf. Die aufeinanderfolgenden Auspuffteile 13 bis 23 sind dicht miteinander verbunden, beispielsweise verschweisst oder durch Hartlöten verbunden.

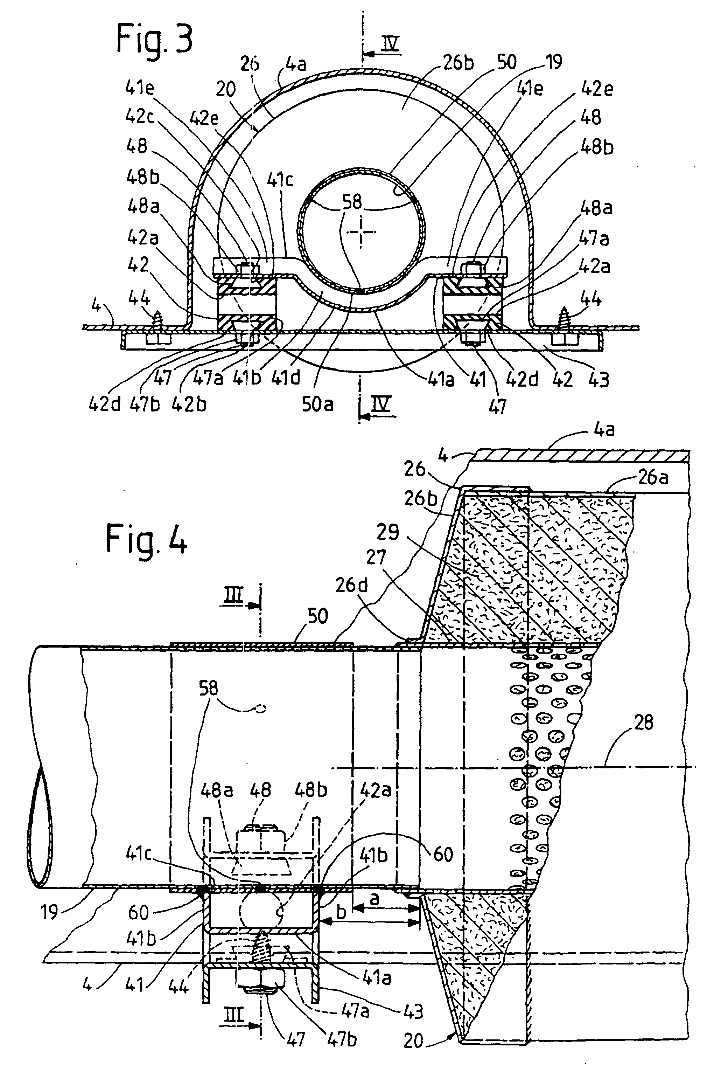

Jeder der Schalldämpfer 20, 22 besitzt ein Gehäuse 26, von denen dasjenige des Schalldämpfers 20 auch in den Figuren 2, 3, 4 ersichtlich ist. Jedes Gehäuse 26 besteht aus einem metallischen Material, beispielsweise rostfreiem Stahl oder einem andern Stahl und besitzt einen rohrförmigen Gehäuse-Mantel 26a und zwei Endwände 26b. Der Gehäuse-Mantel 26a jedes Schalldämpfers ist im Querschnitt beispielsweise gemäss der Fig. 3 kreisförmig, könnte aber stattdessen mehr oder weniger oval sein und definiert eine Gehäuseachse 28. Der Gehäuse-Mantel 26a ist vorzugsweise frei von an ihm angreifenden Haltemitteln. Die Gehäuse-Endwände bilden zum grössten Teil sowie im Wesentlichen mit der Gehäuseachse 28 einen Winkel und sind beispielsweise ungefähr konisch, könnten aber stattdessen senkrecht zur Gehäuseachse oder im Axialschnitt mindestens stellenweise gebogen sein. Die eigentliche, mit der Gehäuseachse einen Winkel bildende Endwand hängt bei ihrem äusseren Rand sowie im zentralen Bereich mit einem kurzen, ungefähr axialen äusseren bzw. inneren Kragen zusammen und besteht mit diesem Kragen zusammen aus einem Blechstück. Der äussere Kragen überlappt einen Randbereich eines den Hauptteil des Mantels bildenden Blechstucks und ist beispielsweise durch Schweissen oder Hartlöten mit diesem verbunden. Der innere Kragen bildet ein Gehäuse-Ende 26d, das zum Verbinden mit weiteren Auspuffteilen, nämlich Rohren bestimmt ist. Weiter weist der Schalldämpfer zum Beispiel mindestens ein perforiertes inneres Rohr 27 und mindestens einen Innenraumbereich auf, der mit einem Fasermaterial 29, wie beispielsweise Glasfasern, Basaltfasern, Steinwolle oder einem ähnlichen Material gefüllt ist. Der innere Kragen jeder Endwand 26b begrenzt eine Öffnung, die beispielsweise zur Gehäuseachse 28 koaxial ist, jedoch auch gegen diese versetzt sein könnte. Der innere Kragen der in den Figuren 2 bis 4 ersichtlichen Endwand 26b bildet das Einlass-seitige Gehäuse-Ende 26d des ersten Schalldämpfers 20 und ist durch Schweiss- oder Hartlötverbindungen mit dem inneren Rohr 27 und über dieses mit dem Rohr 19 des Auspuffs verbunden. Die anderen Gehäuse-Endwände der beiden Schalldämpfer sind je mit einem Ende von einem der Rohre 21, 23 und eventuell ebenfalls noch mit einem inneren Rohr verbunden. Die an die Gehäuse von einem der Schalldämpfer anschliessenden Endabschnitte der Rohre 19, 21, 23 haben zur Gehäuseachse des betreffenden Gehäuses parallele und beispielsweise mit diesen Gehäuseachsen zusammenfallende Rohrachsen. Die Gehäuse-Mäntel und Gehäuse-Endwände der beiden Schalldämpfer haben im Wesentlichen, d.h. abgesehen von den einander überlappenden Krägen und Randbereichen, eine Wanddicke bzw. Materialdicke in der in der Einleitung genannten Grösse. Das innere Rohr 27 und die Endwand 26b des Gehäuses sowie das innere Rohr und das Auspuffrohr 19, 21 oder 23 sind je starr miteinander verbunden, beispielsweise verlötet oder verschweisst.

In den Figuren 2, 3 und 4 ist ein Abschnitt des Fahrzeugbodens 4 ersichtlich. Dieser ist im allgemeinen mehr oder weniger eben, hat jedoch eine nach oben ragende Ausbuchtung. Diese begrenzt einen nach unten offenen Tunnel 4a, in dem sich mindestens ein Teil des Auspuffs 12 und insbesondere mindestens ein Querschnittsbereich des ersten Schalldämpfers 20 befindet.

Wie schon erwähnt, besitzen die Haltemittel 30 vier Halter 31, 32, 33 und 34, von denen der Halter 31 in den Figuren 2 bis 4 ersichtlich ist. Der Halter 31 wird durch ein Halteorgan 41, zwei Dämpfungselemente 42 und ein Verbindungselement 43 gebildet. Das Halteorgan 41 und das Verbindungselement 43 bestehen aus metallischem Material, beispielsweise rostfreiem Stahl. Jedes Dämpfungselement besteht mindestens zum Teil und beispielsweise vollständig aus einem einstückigen, gummielastischen Körper aus synthetischem und/oder natürlichem Gummi. Das Verbindungselement 43 ist länglich, gerade und besteht aus einem U-Profilstab, der auf seiner oberen Seite einen Steg sowie zwei von diesem weg nach unten ragende Schenkel und beispielsweise an seinen Enden noch ebenfalls vom Steg weg nach unten abgebogene und/oder abgewinkelte Endabschnitte hat. Das Verbindungselement 43 ist zum Beispiel gerade und verläuft quer zum Tunnel 4a sowie zu der zu diesem parallelen Gehäuseachse 28, liegt mit seinem Steg auf beiden Seiten des Tunnels an der unteren Fläche des Fahrzeugbodens 4 an und ist starr diesem verbunden und nämlich mittels Schraube 44 an diesem befestigt. Die Dämpfungselemente 42 sind beispielsweise im Wesentlichen quaderförmig und besitzen ein durchgehendes, quer zur Gehäuseachse 28 verlaufendes Loch 42a sowie Ausnehmungen 42b und 42c, in denen je ein Kopf 47a, 48a einer Schraube 47 bzw. 48 sitzt. Die Schraubenköpfe 47a, 48a sind beispielsweise durch Angiessen und/oder Anvulkanisieren des Gummis fest und formschlussig mit dem Dämpfungselement 42 verbunden. Die Schrauben 47, 48 können daher eventuell als Teile des Dämpfungselements angesehen werden. Die Unterseiten 42d der gummielastischen Korper der Dämpfungselemente liegen auf dem Verbindungselement 43 und eventuell auf der Oberseite der dort vorhandenen Schraubenkopfe auf und werden mittels der Schrauben 47 und auf diese aufgeschraubten Muttern 47b am Verbindungselement fixiert. Das Halteorgan 41 ist im Querschnitt U-Profil-formig, besitzt auf seiner unteren Seite einen Steg 41a und zwei von diesem weg nach oben ragende Schenkel 41b, die oben freie Ränder 41c haben. Das Halteorgan weist einen mittleren, gebogenen Abschnitt 41d und zwei von diesem wegragende, im Wesentlichen gerade Arme 41e auf. Der mittlere Abschnitt 41d bildet einen zum Rohr 19 konzentrischen Kreisbogen. Die Arme 41e liegen auf der Oberseite 42e der Dämpfungselemente 42 sowie eventuell auf der Oberseite der dort vorhandenen Schraubenköpfe auf und werden durch diese abgestützt. Die Schrauben 48 und die dazugehörenden Muttern 48b dienen zur Fixierung des Halteorgans 41 auf den Dämpfungselementen 42.

Das Rohr 19 wird im Querschnitt von einem hülsenförmigen Verstärkungselement 50 umschlossen, das im Folgenden auch als Hülse 50 bezeichnet wird und aus einem metallischen Material, beispielsweise aus rostfreiem Stahl, besteht. Das Verstärkungselement 50 bzw. die Hülse 50 ist zylindrisch, im Querschnitt kreisförmig und in axialer Richtung gerade. Das Verstärkungselement 50 bzw. die Hülse liegt satt am Rohr 19 an und ist zum Beispiel auf dieses aufgepresst und/oder durch mindestens eine Punktschweiss-Verbindung 58 am Rohr 19 fixiert, wobei zum Beispiel einige entlang dem Umfang des Verstärkungselements verteilte Punktschweiss-Verbindungen 58 vorhanden sein können. Die Materialdicke bzw. Wanddicke der Hülse liegt in dem in der Einleitung genannten Bereich und beträgt zum Beispiel ungefähr 0,5 mm. Die Hülse 50 ist ein wenig breiter als das Halteorgan 41 und liegt mit einem sich auf ihrer unteren Seite befindenden Umfangsabschnitt 50a beim gebogenen Abschnitt 41d des Halteorgans 41 auf den dem Steg 41a abgewandten Rändern 41c der Schenkel 41b auf. Jeder Rand 41c eines Schenkels 41b steht in einem kleinen Abstand vom sich näher bei ihnen befindenden Ende der Hülse 50. Jeder der beiden an der Hülse anliegenden Ränder 41c ist im Wesentlichen entlang des ganzen Umfangsabschnittes 50a der Hülse 50 durch eine Schweiss-Verbindung 60, nämlich eine Schweiss-Naht, mit der Hülse 50 verbunden. Die Schmelzzone der Schweiss-Verbindung 60 dringt dabei durch die Wand der Hülse 50 hindurch in die Wand des Rohrs 19 hinein. Jede Schweiss-Verbindung 60 verbindet daher sowohl das Halteorgan 41 mit der Hülse 50 als auch diese mit dem Rohr 19 fest und unlösbar.

Die Hülse 50 und das Halteorgan 41 befinden sich so nahe als es herstellungstechnisch leicht machbar ist beim Gehäuse 26 des Schalldämpfers. In der Fig. 4 bezeichnet *a* den Abstand des sich näher beim Gehäuse 26 befindenden Endes der Hülse 50 von der sich am nächsten bei der Hülse befindenden, in axialer Richtung äussersten Stelle der eigentlichen, mit der Gehäuseachse einen Winkel bildenden Endwand 26b. In der Fig. 4 bezeichnet ferner *b* den Abstand der sich am nächsten beim Gehäuse 26 befindenden Stelle des Halteorgans 41 von der sich am nächsten bei diesem befindenden Stelle der beim betreffenden Gehäuse-Ende vorhandenen Endwand 26b. Die genannte Stelle des Halteorgans wird dabei durch dessen sich näher beim Gehäuse befindenden Schenkel 41b gebildet. Die genannte Stelle der Endwand 26b befindet sich beim inneren Rand von dieser, bei dem die konische Endwand mit dem inneren, axialen Kragen zusammenhängt. Die Abstände *a* und *b* werden dabei parallel zur Gehäuseachse 28 entlang dem Rohr 19 und dessen mit der Gehäuseachse 28 zusammenfallenden Rohrachse gemessen. Der Abstand *b* beträgt höchstens 5 cm, vorzugsweise höchstens 3 cm und zum Beispiel ungefähr 2 cm oder noch weniger. Der Abstand *a* ist zum Beispiel etwa 1 mm bis 10 mm kleiner als der Abstand *b* und beträgt dementsprechend ebenfalls höchstens ungefähr 5 cm, zweckmässigerweise höchstens 4 cm und vorzugsweise höchstens 2 cm.

Der Halter 32 ist gleich oder ähnlich ausgebildet wie der Halter 31.

Wenn das Kraftfahrzeug seine in der Einleitung definierte Normalstellung einnimmt, befindet sich die tiefste Stelle des Gehäuses 26 des ersten Schalldämpfers 20 unter den tiefsten Stellen der beiden Halteorgane 41, die dem ersten Schalldämpfer zugeordnet sind und sich ein wenig stromaufwärts bzw. stromabwärts von diesem befinden. Daher befinden sich die ganzen Halteorgane 41 also über der tiefsten Stelle des Schalldämpfers 26. Das Gehäuse 26 des ersten Schalldämpfers 20 ragt ferner zum Beispiel gemäss der Fig. 3 unten aus dem Tunnel 4a heraus, so dass die tiefste Stelle dieses Gehäuses sich in der Normalstellung ungefähr in der Höhe der tiefsten Stelle der Verbindungselemente 42 und der ganzen Halter 31, 32 oder sogar unter diesen befindet. Ferner können die beiden dem ersten Schalldämpfer zugeordneten metallischen Halteorgane 41 und mindestens die grössten Teile der an diesen Halteorganen befestigten Dämpfungselemente 42 innerhalb des Tunnels angeordnet sein.

Der zweite Schalldämpfer 22 und dessen Gehäuse 26 befinden sich zum Beispiel hinter dem Tunnel 4a. Die zwei diesem Schalldämpfer zugeordneten, zum mittelbaren Halten von diesem dienenden Halter 33, 34 sind teilweise ähnlich wie die Halter 31, 32 ausgebildet und weisen beispielsweise ebenfalls ein Verbindungselement, zwei Dämpfungselemente und ein Halteorgan auf, das an einem auf das entsprechende Auspuffrohr aufgesteckten, hülsenförmigen Verstärkungselement 50 befestigt ist. Die Halteorgane 41 der beiden Halter 33, 34 sind beispielsweise analog wie die Halteorgane 41 der Halter 31, 32 auf der unteren Seite der von ihnen getragenen Verstärkungselemente 50 und Rohre 21 bzw. 23 angeordnet. Die Dämpfungselemente der Halter 33, 34 können ebenfalls gleich oder ähnlich wie diejenigen der Halter 31, 32 ausgebildet sein. Dagegen sind die Verbindungselemente der beiden Halter 33, 34 dann beispielsweise derart abgewinkelt oder abgebogen oder mit zusätzlichen Teilen versehen, dass sie zum Beispiel oberhalb des zweiten Schalldämpfers am Fahrzeugboden 4 und eventuell an einem anderen Teil des Fahrzeugkörpers befestigt werden können.

Durch die aus den Haltern 31, 32, 33 und 34, den Schrauben 44, sowie den Hülsen 50 bestehenden Haltemittel 30 ist der Auspuff 12 mit dem Fahrzeugboden 4 verbunden. Da die Dämpfungselemente elastisch sind, kann sich dabei jedes Rohr 19, 21, 23 gegen den Widerstand einer durch die Dämpfungselemente 42 bei einer Auslenkung aus ihrer Ruhelage bewirkten Kraft bewegen. Auf diese Weise sorgen die Dämpfungselemente 42 dafür, dass vom Verbrennungsmotor auf die Abgasanlage 11 übertragene Vibrationen nicht auf das Fahrgestell 5 übertragen werden. Dadurch, dass die Dämpfungselemente 42 in Wesentlichen quaderförmig mit einem durchgehenden Loch 42a ausgebildet sind, wird Bewegungen in verschiedene Richtungen nicht derselbe Widerstand entgegengesetzt. So werden beispielsweise Bewegungen in vertikaler Richtung relativ stark gehemmt, so dass nur kleine Auslenkungen möglich sind. Andererseits bewirken die Löcher 42a, dass Auslenkungen in der Längsrichtung der Gehäuse der Schalldämpfer weniger Widerstand entgegengebracht wird. Dadurch können bei Längenausdehnungen des Auspuffs 11 durch dessen Erwärmung im Betrieb die Dämpfungselemente 42 deformiert werden, ohne dass allzu grosse Kräfte auf die Schweiss-Verbindungen 60 ausgeübt werden, obschon die beiden Schalldämpfer-Gehäuse durch das Rohr 21 ohne Zwischenschaltung eines Wellenbalgs oder sonstigen, längenveränderlichen Leitungselementes miteinander verbunden sind.

Bei der Herstellung der Abgasanlage werden in einem ersten Schritt die Einlass- und Sammelvorrichtung 13, der Katalysator 14, die Verbindung 15, die deformierbaren Leitungselemente 16, 18, die Rohre 17, 19, 21, 23, die Schalldämpfer 20, 22 und die verschiedenen Teile der Halter 31, 32, 33, 34 beschafft und/oder angefertigt. Anschliessend werden die Verstärkungselemente bzw. Hülsen 50 auf die Rohre 21, 19 und 23 aufgeschoben und provisorisch fixiert. Diese Fixierung kann beispielsweise durch Aufpressen des hülsenförmigen Verstärkungselements auf das betreffende Rohr und eine daraus resultierende Press-Verbindung und/oder durch die eventuell vorhandenen, schon erwähnten Punktschweiss-Verbindungen 58 erzeugt werden. Anschliessend wird das Verstärkungselement 50 zum Aufliegen auf dem gebogenen Abschnitt 41d eines Halteorganes 41 gebracht und mit den Rändern 41c verschweisst. Die Zeit, während der ein Lichtbogen oder eine Schweissflamme auf das Verstärkungselement 50 einwirkt, ist dabei so auf dessen Dicke abgestimmt, dass jede Schweiss-Verbindung 60 gleichzeitig auch das Rohr und das Verstärkungselement 50 miteinander verbindet und das Verstärkungselement bei jeder Schweiss-Verbindung 60 mit dem Rohr verschmolzen ist. Der Schweissvorgang wird dabei derart durchgeführt, dass keine Löcher und Lecks im Rohr entstehen. Ferner werden - vor oder nach dem Anschweissen der Halteorgane 41 - die beiden Schalldämpfer-Gehäuse durch Schweissen oder Hartlöten mit den Rohren 19, 21, 23 und auch die übrigen Auspuff-Bestandteile miteinander durch Schweissen und/oder durch Hartlöten verbunden.

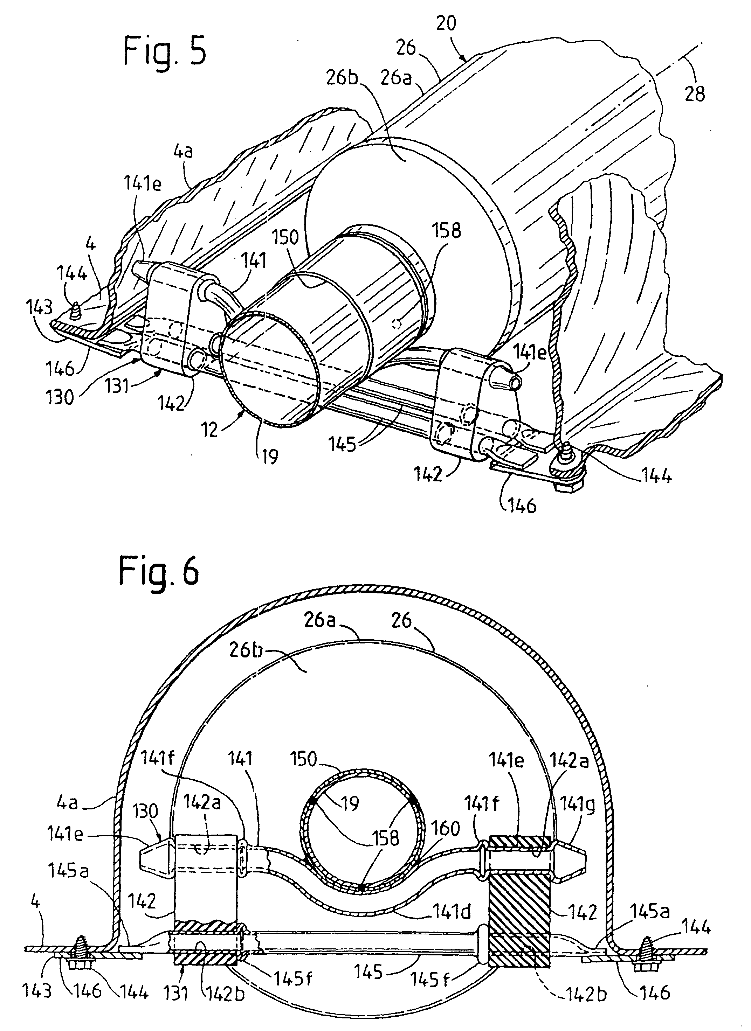

Die Figuren 5 bis 9 zeigen Abschnitte und Teile eines Fahrzeugbodens 4 mit einem Tunnel 4a und Teile einer Variante der Abgasanlage. Diese besitzt einen Auspuff, der zum Beispiel weitgehend gleich oder ahnlich ausgebildet ist wie der Auspuff gemäss den Figuren 1 bis 4 und wie dieser mit 12 bezeichnet ist. Der Auspuff der in den Figuren 5 bis 9 ersichtlichen Abgasanlage besitzt insbesondere auch einen ersten Schalldämpfer mit einem Gehäuse und mit diesem verbundene, zum Leiten des Abgases dienende Rohre, wobei diese Auspuffteile mit den gleichen Bezugsnummern bezeichnet sind wie beim Ausführungsbeispiel gemäss den Figuren 1 bis 4. Dagegen besitzt die Abgasanlage gemäss den Figuren 5 bis 9 etwas anders ausgebildete und mit 130 bezeichnete Haltemittel. Diese weisen zwei in der Nähe der beiden Enden des ersten Schalldämpfers 20 angeordnete Halter 131, 132 und zwei in der Nähe des in den Figuren 5 bis 9 nicht gezeichneten, zweiten Schalldämpfers angeordnete Halter auf. Der beim Einlass-seitigen Gehäuse-Ende 26d des ersten Schalldämpfers 20 angeordnete, erste Halter 131 besitzt ein metallisches Halteorgan 141, zwei mindestens zum Teil gummielastische Dämpfungselemente 142 und ein metallisches Verbindungselement 143. Das Halteorgan 141 ist in noch näher beschriebener Weise über ein bei dieser Variante mit 150 bezeichnetes, metallisches Verstärkungselement mit dem Rohr 19 verbunden. Das Verstärkungselement 150 kann ebenfalls noch als Teil des Halters aufgefasst werden und ist wiederum durch eine zylindrische, im Querschnitt kreisförmige, in axialer Richtung gerade Hülse 150 gebildet, die das Rohr 19 im Querschnitt vollständig sowie entlang von ihrem Umfang unterbruchslos umschliesst und satt sowie unbeweglich auf dem Rohr sitzt.

Das Halteorgan 141 ist wiederum länglich und besteht aus einem hohlen Stab 141, d.h. aus einem dünnen Röhrchen 141, dessen Durchmesser wesentlich kleiner ist als derjenige der Abgas leitenden Rohre des Auspuffs. Das Halteorgan 141 bzw. Röhrchen 141 war ursprunglich zylindrisch, im Querschnitt kreisförmig sowie gerade, wurde jedoch plastisch verformt und hat einen mittleren, gebogenen Abschnitt 141d. Dieser bildet einen Kreisbogen, der zu dem im Querschnitt kreisförmigen Rohr 19 konzentrisch ist. Der mittlere, gebogene Abschnitt 141d des Halteorgans 141 bzw. Rohrchens ist zum Beispiel im Querschnitt noch ungefähr kreisförmig oder mehr oder weniger stark zusammengequetscht. Das Halteorgan 141 hat auf beiden Seiten des mittleren, gebogenen Abschnitts 141d einen von diesem wegragenden Arm 141e. Jeder der beiden Arme 141e hat einen geraden, zylindrischen und im Querschnitt kreisförmigen Abschnitt und bei beiden Enden von diesem einen durch plastisches Verformen gebildeten Wulst 141f bzw. 141g. Der äussere, weiter vom mittleren Abschnitt 141d entfernte Wulst 141g jedes Arms verjüngt sich zum freien Ende des Halteorgans hin ungefähr konisch, so dass der Durchmesser des Halteorgans beim freien Ende von diesem höchstens gleich dem Durchmesser des zylindrischen, zwischen den beiden Wülsten vorhandenen Abschnitts des Arms und zum Beispiel etwas dünner als dieser Durchmesser ist.

Jedes Dämpfungselement 142 des ersten Halters 131 weist einen gummielastischen Körper auf und besteht zum Beispiel vollständig aus einem solchen. Jedes durch einen gummielastischen Körper gebildete Dämpfungselement 142 hat drei durchgehende, zylindrische, im Querschnitt kreisförmige, zueinander parallele Löcher, nämlich ein oberes Loch 142a und zwei untere, nebeneinander angeordnete Löcher 142b. Jedes zum ersten Halter gehörende Dämpfungselement 142 hat in einer zu seinen Löchern parallelen Blickrichtung ungefähr die Form eines gleichschenkligen Dreiecks mit einer sich unter den beiden untern Löchern befindenden Basis und zwei nach oben zueinander hin geneigten Schenkeln bzw. Seiten, wobei jedoch die Ecken durch Bogen ersetzt sind.

Das Verbindungselement 143 ist länglich und weist zwei hohle Stäbe 145 bzw. dünne Röhrchen 145 und zwei Endstücke 146 auf. Die hohlen Stäbe 145 bzw. Röhrchen 145 sind im Allgemeinen zylindrisch sowie im Querschnitt kreisförmig, haben jedoch an beiden Enden plattgedruckte Endabschnitte 145a. Jeder hohle Stab 145 hat ferner zwei durch plastisches Verformen gebildete Wülste 145f. Die beiden hohlen Stäbe 145 bzw. dünnen Röhrchen haben wesentlich kleinere Durchmesser als die Rohre des Auspuffs, verlaufen parallel zueinander und sind zum Beispiel im Wesentlichen gerade.

Der sich zwischen zwei Wülsten 141f, 141g befindende zylindrische Abschnitt von jedem Arm 141e des Halteorgans 141 durchdringt das obere Loch 142a von einem der Dämpfungselemente 142. Die sich zwischen einem Endabschnitt 145a und einem Wulst 145f befindenden Abschnitte des hohlen Stabs 145 durchdringen eines der unteren Löcher 142b von einem der Dämpfungselemente 142. Die Wülste 141f, 141g und 145f liegen an den Dämpfungselementen 142 an und sichern diese gegen Verschiebungen entlang den hohlen Stäben 141 und 145. Die Dämpfungselemente 142 können beim Zusammenbauen eines Halters unter einer vorübergehenden elastischen Deformation auf das aus einem hohlen Stabe bestehende Halteorgan 141 und auf die beiden hohlen Stäbe 145 des Verbindungselements 143 aufgeschoben werden und verbinden dann das Halteorgan 141 schwingungsdämpfend mit dem Verbindungselement 145 des ersten Halters 121. Jedes Endstück 146 besteht aus einem ebenen Plättchen und ist durch Schweissen oder Hartlöten mit den plattgedrückten Endabschnitten 145a von je einem der beiden hohlen Stäbe 145 verbunden. Jedes Endstück 145 hat mindestens ein Loch, so dass es beim Montieren des Auspuffs an der unteren Fläche des Fahrzeugbodens 4 anliegen und mit mindestens einer Schraube 144 an diesem befestigt werden kann.

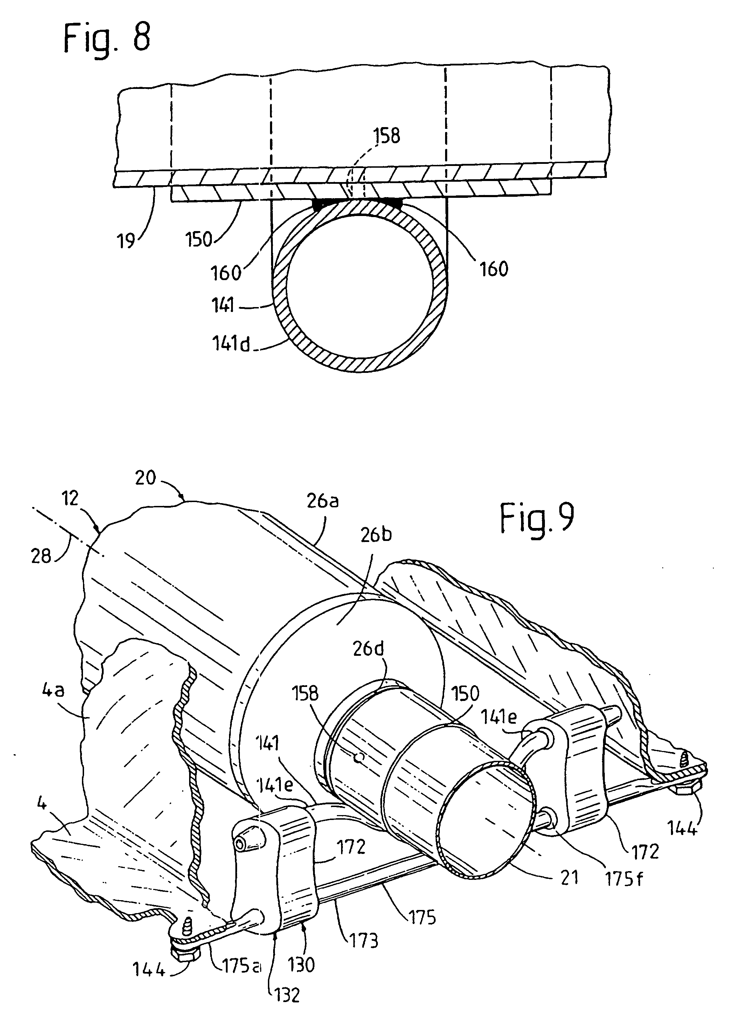

Das Verstärkungselement 150 ist zum Beispiel auf das Rohr 19 aufgepresst sowie durch eine Press-Verbindung und/oder durch mindestens eine Punktschweiss-Verbindung 158 sowie vorzugsweise durch zwei oder mehr entlang dem Umfang verteilte Punktschweiss-Verbindungen 158 starr mit dem Rohr 19 verbunden. Der mittlere, gebogene Abschnitt 141d des Halteorgans 141 liegt entlang einem Bogen am Verstärkungselement 150 an und ist durch mindestens eine Hartlöt-Verbindung 160 starr mit dem Verstärkungselement 150 und dadurch über dieses starr mit dem Rohr 19 verbunden. Der mittlere Abschnitt 141d ist dabei gemäss der Fig. 8 in einem durch ihn verlaufenden Querschnitt auf beiden Seiten seiner sich am nächsten beim Verstärkungselement befindenden und an diesem anliegenden Mantellinie durch je eine Hartlöt-Verbindung 160 bzw. Hartlöt-Naht 160 mit dem Verstärkungselement verbunden. Diese beiden Hartlöt-Verbindungen erstrecken sich entlang dem ganzen am Verstärkungselement anliegenden Teil des Halteorgans 141 und können beispielsweise bei den Stellen zusammenhängen, bei denen das Halteorgan 141 vom Verstärkungselement wegragt.

In der Fig. 9 ist der zweite Halter 132 ersichtlich, der beim Auslass-seitigen Ende des ersten Schalldämpfers 20 mit dem Rohr 21 verbunden ist und ein Halteorgan, zwei Dämpfungselemente, ein Verbindungselement und ein Verstärkungselement hat. Das Halteorgan des zweiten Halters ist gleich oder ähnlich ausgebildet wie das Halteorgan 141 des ersten Halters 131 und ebenfalls mit 141 bezeichnet. Jedes der beiden Dämpfungselemente 172 des zweiten Halters 132 besteht wiederum aus einem gummielastischen Körper, der aber statt drei Löcher nur zwei Löcher, nämlich ein oberes Loch und ein unteres Loch hat. Diese zwei Löcher sind wiederum durchgehend, zueinander parallel, im Wesentlichen zylindrisch und im Querschnitt kreisförmig. Das Verbindungselement des zweiten Halters ist mit 173 bezeichnet und besteht aus einem einzigen hohlen Stab 175 bzw. Röhrchen 175. Dieses ist zum grossten Teil zylindrisch, im Querschnitt kreisförmig sowie gerade, hat jedoch an beiden Enden einen plattgedrückten Endabschnitt 175a mit einem Loch und zwei Wülste 175f. Jeder Arm 141e des Halteorgans 141 des zweiten Halters 132 durchdringt analog wie beim ersten Halter das obere Loch von einem der beiden Dämpfungselemente 172. Der hohle Stab 175 des Verbindungselements des 173 durchdringt das untere Loch der beiden Dämpfungselemente und liegt mit seinen Wülsten 175f an den inneren Seiten der beiden Dämpfungselemente an. Die beiden Dämpfungselemente 172 verbinden das Halteorgan 141 schwingungsdämpfend mit dem Verbindungsorgan. Das Verstärkungselement des zweiten Halters 132 ist wie beim ersten Halter mit 150 bezeichnet und analog wie beim ersten Halter durch Punktschweiss-Verbindungen 158 mit dem Rohr 21 sowie durch Hartlöt-Verbindungen mit dem Halteorgan 141 verbunden. Das Verbindungsorgan 173 des zweiten Halters ist analog wie dasjenige des ersten Halters mit Schrauben 144 an der unteren Seite des Fahrzeugbodens 4 befestigt.

Die Halteorgane 141 und Verbindungselemente 143, 173 der beiden Halter 131, 132 befinden sich auf der unteren Seite der von ihnen gelaltenen Rohre. Die hohlen Stäbe bzw. Röhrchen der Halteorgane und Verbindungselemente sind im Grundriss ungefähr oder genau quer zu den Achsen der mit ihnen verbundenen Abschnitte der Rohre 19 und 21 sowie der Gehäuseachse 28. Das Halteorgan 141 von jedem Halter 131, 132 ist - wie beim ersten Ausführungsbeispiel - im Grundriss auf verschiedenen Seiten des gehaltenen Rohrs 19 bzw. 21 durch eines der Dämpfungselemente 142 bzw. 172 mit einem Verbindungselement 143 bzw. 173 verbunden, das seinerseits auf verschiedenen Seiten des Rohrs 19 bzw. 21 und des Tunnels 4a am Fahrzeugboden 4 befestigt ist. Die Halteorgane 141 der beiden Halter 131, 132 befinden sich vollständig innerhalb des Tunnels 4a. Die Dämpfungselemente 142, 172 der beiden Halter 131, 132 befinden sich teilweise im Tunnel.

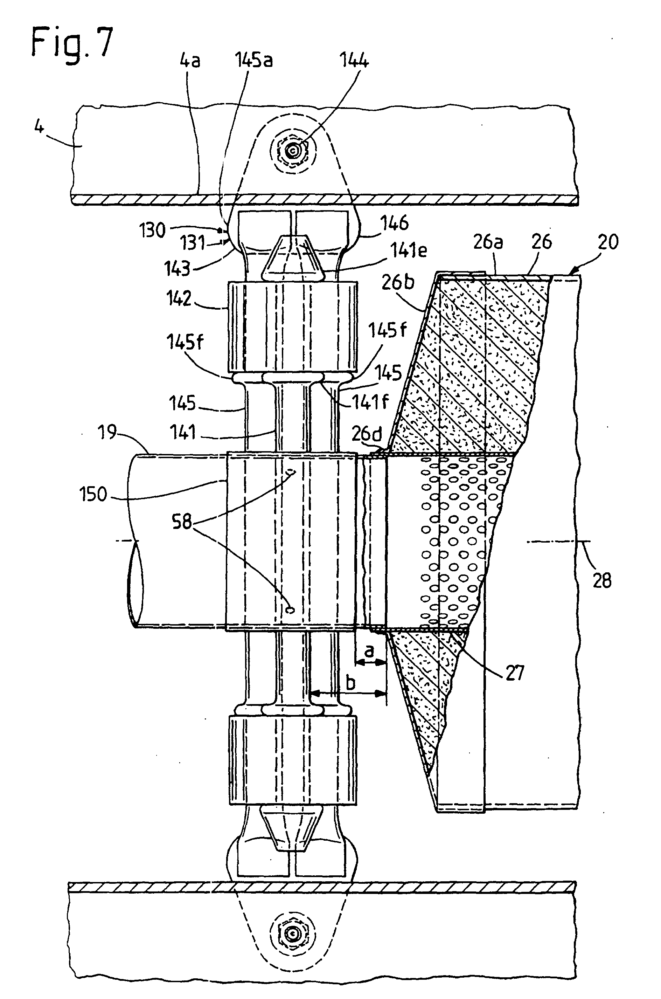

In der Figur 7 sind noch die Abstande *a* und *b* eingezeichnet. Diese haben analoge Bedeutungen wie die entsprechenden, in der Figur 4 eingezeichneten Abstände und können auch in den gleichen Grössenbereichen liegen.

Der in den Figuren 5 bis 9 nicht dargestellte, zweite Schalldämpfer 22 kann in der Nähe seiner beiden Enden bei den mit diesen verbundenen Rohren mit einem dritten Halter und einem vierten Halter mit dem Fahrzeugboden verbunden sein. Diese Halter können mehr oder weniger ähnlich wie der zweite Halter 132 ausgebildet sein und insbesondere wie dieser ein Verbindungselement aufweisen, das nur einen einzigen hohlen, zwei Dämpfungselemente durchdringenden Stab hat. Da sich der zweite Schalldämpfer jedoch zum Beispiel hinter dem Tunnel befindet, müssen die Verbindungsorgane des dritten und vierten Halters anders am Fahrzeugboden befestigt werden. Wenn sich die Halteorgane und hohlen Stäbe der Verbindungselemente des dritten und vierten Halters analog wie beim ersten und zweiten Halter auf der untern Seite der Rohre des Auspuffs befinden, können die Verbindungsorgane des zweiten und dritten Halters dann zum Beispiel noch Befestigungsteile aufweisen, die von den Enden der im Wesentlichen geraden, hohlen Stäbe 175 weg nach oben zum Fahrzeugboden ragen und an diesem befestigt sind. Die Halteorgane und die hohlen Stäbe 175 der Verbindungselemente des dritten und vierten Halters können jedoch eventuell auf der oberen Seite statt auf der unteren Seite der mit ihnen verbundenen Rohre angeordnet werden. Die über Verstärkungselemente mit den Rohren verbundenen Halteorgane können dann mit den Dämpfungselementen an den sich über ihnen befindenden hohlen Stäben 175 der Verbindungselemente aufgehängt sein, so dass sich die mittleren Abschnitte der hohlen Stäbe 175 ziemlich nahe beim Fahrzeugboden befinden. Es kann dann zum Beispiel ausreichen, die aus den Dämpfungselementen herausragenden Endabschnitte der Stäbe 175 etwas zu verlängern und derart abzukröpfen, dass sie am Fahrzeugboden anliegen und befestigt werden können.

Die Löcher der beiden zum gleichen Halter gehörenden Dämpfungselemente 142, 172 sind paarweise miteinander fluchtend und haben in der Normalstellung des Kraftfahrzeugs zum Beispiel ungefähr horizontale Achsen. Das Halteorgan 141 des ersten Halters 131 befindet sich dann ungefähr vertikal über dem Zwischenraum zwischen den beiden hohlen Stäben 145 des Verbindungselements. Das Halteorgan 141 des zweiten Halters 132 befindet sich auch oberhalb des hohlen Stabs 175 des Verbindungselements 173, kann sich aber in noch beschriebener Weise ein wenig bewegen. Ferner wird zunächst angenommen, dass der Auspuff 12 im Grundriss vom Rohr 19 bis zum Rohr 23 vollständig gerade und zum Beispiel parallel zur Längsrichtung des Fahrzeugs ist. Die hohlen Stäbe, welche die Halteorgane und mindestens wesentliche Teile der Verbindungselemente bilden, können dann im Grundriss genau quer zu den Gehäuseachsen sowie Rohrachsen angeordnet sein, so dass die Löcher der gummielastischen Körper der Dämpfungselemente und die diese durchdringenden Abschnitte der hohlen Stäbe genau rechtwinklig zur Längsrichtung der von den Haltern gehaltenen Rohre sind.

Da das Verbindungselement 143 des ersten Halters 131 zwei hohle Stäbe hat, können sich die Dämpfungselemente 142 des ersten Halters 131 nicht um das Verbindungselement drehen und verbinden daher das Halteorgan 141 im Wesentlichen unverschwenkbar mit dem Verbindungselement 143. Der erste Halter 131 verbindet daher das Rohr 19, welches das zweite elastisch deformierbare und flexible Leitungselement 18 mit dem Einlass des ersten Schalldämpfers verbindet, schwingungsdämpfend, aber sonst in allen Richtungen relativ fest und wenig beweglich mit dem Fahrzeugboden. Dagegen können sich die Dampfungselemente 172 des zweiten Halters 132 und die gleich ausgebildeten Dämpfungselemente aller andern sich entlang dem Auspuff stromabwärts vom ersten Halter befindenden Halter um das Halteorgan 141 und um den hohlen Stab 175 des Verbindungselements 173 drehen. Das Halteorgan 141 des zweiten und jedes folgenden Halters kann sich dementsprechend um das Verbindungselement 173 verschwenken.

Beim Betrieb des Verbrennungsmotors strömt heisses Abgas durch den Auspuff, so dass dieser erhitzt wird und sich verlängert. Das zum zweiten Halter gehörende Halteorgan kann sich bei kaltem Motor und in der Normalstellung des Kraftfahrzeugs ungefähr senkrecht über dem hohlen Stab 175 des Verbindungselements 173 oder ein wenig stromaufwärts oberhalb von diesem befinden. Wenn sich der Auspuff beim Erhitzen verlängert, können die Halteorgane der auf den ersten Halter folgenden Halter um die hohlen Stäbe der Verbindungselemente dieser Halter verschwenkt werden und dadurch die Längenänderungen des Auspuffs auffangen. Dagegen verbinden die auf den ersten Halter folgenden Halter die von ihnen gehaltenen Auspuffteile in allen zur Längsrichtung des Auspuffs ungefähr rechtwinkligen Richtungen relativ fest sowie fast unbeweglich mit dem Fahrzeugboden.

Die verschiedenen Halter tragen insbesondere den sich stromabwärts vom zweiten deformierbaren und insbesondere flexiblen Leitungselement 18 befindenden Auspuffteil, auf den zusätzlich zu dessen eigenem Gewicht noch durch das Fahren erzeugte Kräfte einwirken. Dabei kann besonders das Fahren über Löcher, Stufen und dergleichen grosse vertikale Beschleunigungen erzeugen. Die gummielastischen Körper aller Halter sind vorzugsweise so steif, dass die Gehäuse und Halteorgane durch auf den genannten Auspuffteil ausgeübte Beschleunigungen von 10 m/s² in allen zur Längsrichtung der gehaltenen Rohre rechtwinkligen Richtungen höchstens 5 mm und vorzugsweise höchstens 1 mm ausgelenkt werden. Zumindest wenn die auf den genannten Auspuffteil einwirkenden Beschleunigungen in der Normalstellung des Fahrzeugs ungefähr vertikal sind, sollen sogar Beschleunigungen von 30 m/s² vorzugsweise nur Auslenkungen von höchstens 5 mm und besser höchstens 1 mm verursachen. Die gummielastischen Körper des ersten Halters 131 sind vorzugsweise derart ausgebildet, dass in jeder beliebigen Richtung - also auch in der Längsrichtung - auf den genannten Auspuffteil einwirkende Beschleunigung von 10 m/s² oder sogar 30 m/s² nur Auslenkungen des Halteorgans 141 des ersten Halters von höchstens 5 mm oder sogar nur höchstens 1 mm verursachen.

Nun wird angenommen, dass das Rohr 21 im Grundriss teilweise gebogen und oder abgewinkelt ist, so dass der zweite Schalldämpfer im Grundriss seitlich gegen den ersten Schalldämpfer versetzt ist. In diesem Fall können die beiden beim zweiten Schalldämpfer angeordneten Halter Halteorgane und Verbindungselemente mit hohlen Stäben haben, die im Grundriss nicht genau rechtwinklig zu den gehaltenen Rohren, sondern beispielsweise ungefähr rechtwinklig zu einer Verbindungsgeraden sind, die durch Zentren der beiden Schalldämpfer verläuft. Die Dämpfungselemente der beim zweiten Schalldämpfer angeordneten Halter können sich dann entlang einer durch diese Verbindungsgeraden verlaufenden Vertikalebene verschwenken und dadurch Längenänderungen des die beiden Schalldämpfer verbindenden Rohrs sowie des zweiten Schalldämpfers ausgleichen. Diese Halter sollen dann zumindest bei Beschleunigungen von 10 m/s² oder sogar 30 m/s² in allen zur genannten Verbindungsgeraden rechtwinkligen Richtungen höchstens 5 mm und besser höchstens 1 mm ausgelenkt werden.

Soweit vorgängig nichts anderes geschrieben wurde, können die Halter 131, 132 gemäss den Figuren 5 bis 9 ähnliche Eigenschaften aufweisen und auch mehr oder weniger ähnlich hergestellt werden wie die Halter 31 bis 34 gemäss den Figuren 1 bis 4. Die Halteorgane 141 der Halter 131, 132 werden jedoch zum Beispiel eben nicht durch Schweissen, sondern durch Hartlöten an den hülsenförmigen Verstärkungselementen befestigt. Im Übrigen können die die Dämpfungselemente 142, 172 bildenden gummielastischen Körper beispielsweise in sehr wirtschaftlicher Weise hergestellt werden, indem durch Extrudieren oder dergleichen Stangen mit dem gewünschten Profil erzeugt und danach gummielastische Körper bzw. Dämpfungselemente von diesen abgeschnitten oder sonst wie abgetrennt werden. Die Steifigkeit der letzteren kann dabei durch Variieren der Dicke der abgetrennten Stücke an verschieden grosse und verschieden schwere Gehäuse und Auspuffe angepasst werden.

Abschliessend sei noch erwähnt, dass die vorstehend beschriebenen Abgasanlagen noch in mehrfacher Hinsicht geändert werden können. Es können beispielsweise Merkmale der beiden beschriebenen Ausführungsbeispiele miteinander kombiniert werden. Zum Beispiel können die Halteorgane bei beiden gezeichneten Varianten durch Hartlöten oder Schweissen oder aber eventuell sogar durch Kleben an den Verstärkungselementen befestigt werden. Ferner können die Halteorgane, die dem hinter dem Tunnel angeordneten, zweiten Schalldämpfer 22 zugeordnet sind, auch bei der Anlage gemäss den Figuren 1 bis 4 eventuell auf der oberen Seite statt auf der unteren Seite der Rohre 21, 23 angeordnet und an von oben angreifenden Dämpfungselementen aufgehängt sowie über diese an Verbindungselementen aufgehängt sein analog wie es schon als Möglichkeit für die Abgasanlage gemäss den Figuren 5 bis 9 erwähnt wurde. Auch die Form der gummielastischen Dämpfungselemente kann variieren. Sie können zum Beispiel pilzförmige oder anders ausgestaltete Befestigungs- und Verbindungsmittel besitzen, die zusammen mit dem Dämpfungselement aus einem einstuckigen Korper bestehen und bei der Variante gemäss den Figuren 1 bis 4 anstelle der Schrauben 47, 48 die Dampfungselemente mit dem Verbindungselement und dem Halteorgan verbinden. Ein Dämpfungselement kann aber auch einen gummielastischen Körper mit mindestens einer eingegossenen oder anvulkanisierten metallischen Buchse besitzen. Weiter kann ein Halter eventuell auch nur ein Dämpfungselement 42 aufweisen.

Eventuell kann auch mindestens ein Halteorgan über ein Verstärkungselement an einem Gehäuse-Mantel befestigt werden. Ferner kann mindestens ein Verstärkungselement an einem im Querschnitt ungefähr ovalen Rohr oder Gehäuse-Mantel befestigt werden und hat dann selbstverständlich ebenfalls eine ungefähr ovale Form, so dass es entlang dem ganzen Umfang anliegt. Ein Verstärkungselement kann statt aus einer einstückigen Hülse eventuell aus zwei oder noch mehr fest miteinander verbundenen Teilen oder aus einem dünnen, metallischen, um ein Rohr oder einen Gehäuse-Mantel gewickelten und dann beispielsweise durch Hartlöten oder Schweissen fixierten Band bestehen. Statt einem Katalysator und zwei Schalldämpfern kann die Abgasanlage auch nur einen Katalysator und einen Schalldämpfer oder zwei Katalysatoren und mindestens einen Schalldämpfer oder einen kombinierten Katalysator/Schalldämpfer und einen weiteren Schalldämpfer, aufweisen. Dabei könnte zum Beispiel ein Katalysator oder ein zusammen mit einem Schalldämpfer ein gemeinsames Gehäuse aufweisender Katalysator stromaufwärts von den beiden elastisch deformierbaren, flexiblen Leitungselementen 16 und 18 angeordnet werden. Ein derart angeordneter Katalysator oder Katalysator/Schalldämpfer könnte dann ein Gehäuse aufweisen, das beiderseits mit Rohren und über diese analog mit Haltern verbunden ist, wie es für den ersten Schalldämpfer 20 beschrieben wurde.

## Patentansprüche

1. Abgasanlage (11) für ein einen Fahrzeugkörper (2) und einen Verbrennungsmotor (6) aufweisendes Kraftfahrzeug (1), mit einem zum Verbinden mit dem Verbrennungsmotor (6) bestimmten Auspuff (12), der mindestens ein Gehäuse (26) eines Schalldämpfers (20, 22) und/oder Katalysators mit einem im Wesentlichen eine Materialdicke von höchstens 1 mm aufweisenden Gehäuse-Mantel (26a) sowie zwei Gehäuse-Enden (26d) aufweist, von denen mindestens eines starr mit einem metallischen, eine Materialdicke von höchstens 1 mm aufweisenden Rohr (19, 21, 23) zum Leiten des Abgases verbunden ist, und mit Haltemitteln (30, 130) zum Halten des Auspuffs (12) am Fahrzeugkörper (2), wobei die Haltemittel (30, 130) metallische, mit einem Auspuffteil (19, 21, 23) verbundene Halteorgane (41, 141) aufweisen, **dadurch gekennzeichnet, dass** mindestens eines der Halteorgane (41, 141) mit einem diesem zugeordneten Verstärkungselement (50, 150) verbunden ist, welches das bzw. ein Rohr (19, 21, 23), mit einer Materialdicke von höchstens 1 mm oder den Gehäuse-Mantel im Querschnitt mindestens annähernd umschliesst und am Rohr (19, 21, 23) bzw. Gehäuse-Mantel befestigt ist.

2. Abgasanlage nach Anspruch 1, **dadurch gekennzeichnet, dass** das bzw. jedes Verstärkungselement (50) durch Aufpressen und/oder Schweissen und/oder Hartlöten und/oder plastisches Verformen, beispielsweise Crimpen und/oder Sicken-Bildung, und/oder Kleben mit dem von ihm mindestens annähernd umschlossenen Rohr (19, 21, 23) bzw. Gehäuse-Mantel verbunden ist.

3. Abgasanlage nach Anspruch 1 oder 2, **dadurch gekennzeichnet, dass** beide Gehäuse-Enden (26d) starr mit einem Rohr (19, 21, 23) verbunden sind, dass die Haltemittel (30, 130) für jedes mit einem Gehäuse-Ende verbundene Rohr (19, 21, 23) ein metallisches Halteorgan (41, 141) aufweisen und dass jedes Halteorgan (41, 141) an einem eines der Rohre (19, 21, 23) umschliessenden Verstärkungselement (50, 150) und/oder an einem der Rohre (19, 21, 23) anliegt sowie befestigt ist, wobei vorzugsweise jeder Gehäuse-Mantel (26a) frei von an ihm angreifenden Haltemitteln ist.

4. Abgasanlage nach einem der Ansprüche 1 bis 3, **dadurch gekennzeichnet, dass** jedes Halteorgan (41, 141) durch Schweissen oder Hartlöten oder Kleben am zugeordneten Verstärkungselement (50, 150) und/oder an einem der Rohre (19, 21, 23) befestigt ist.

5. Abgasanlage nach einem der Ansprüche 1 bis 4, **dadurch gekennzeichnet, dass** das bzw. jedes Halteorgan (41, 141) einen über ein Verstärkungselement (50, 150) oder direkt mit einem der Rohre (19, 21, 23) oder dem Gehäuse-Mantel verbundenen, mittleren Abschnitt (41d, 141d) aufweist und auf einander abgewandten Seiten von diesem wegragende Arme (41e, 141e) aufweist, von denen jeder mit einem mindestens teilweise gummielastischen Dämpfungselement (42, 142, 172) verbunden ist,

6. Abgasanlage nach einem Anspruch 5, **dadurch gekennzeichnet, dass** jedes Halteorgan (41, 141) durch die Dämpfungselemente (42, 142, 172) mit ein und demselben, zum starren Verbinden mit dem Fahrzeugkörper (2) bestimmten länglichen, metallischen Verbindungselement (43, 143, 173) verbunden ist, so dass das Halteorgan (41, 141), das Verbindungselement (43, 143, 173) und die Dämpfungselemente (42, 142, 172) zusammen einen Halter (31, 32, 33, 34, 131, 132) bilden.

7. Abgasanlage nach Anspruch 6, **dadurch gekennzeichnet, dass** der Auspuff (12) einen Abgas-Stromungsweg definiert und die Halter (131,132) einen entlang dem Strömungsweg ersten Halter (131) und mindestens einen entlang dem Strömungsweg auf diesen folgenden Halter (132) aufweisen, dass die Dämpfungselemente (142) des ersten Halters (131) das Halteorgan (141) unverschwenkbar mit dem Verbindungselement (143) des ersten Halters (131) verbinden, dass die Dämpfungselemente (172) das Halteorgan (41) des bzw. jedes auf den ersten Halter (131) folgenden Halters (132) verschwenkbar mit dem Verbindungselement (173) des betreffenden, auf den ersten Halter (131) folgenden Halters (132) verbinden.

8. Abgasanlage nach einem der Ansprüche 5 bis 7, **dadurch gekennzeichnet, dass** mindestens eines der Halteorgane (141) ein Röhrchen aufweist, das den mit dem zugeordneten Verstärkungselement (150) und/oder einem der Rohre (19, 21, 23) verbundenen mittleren Abschnitt (141d) des Halteorgans (141) bildet und beim mittleren Abschnitt (141d) durch Schweissen oder Hartlöten oder Kleben am Verstärkungselement (150) und/oder am Rohr (19, 21, 23) befestigt ist und dass das Röhrchen auf beiden Seiten des mittleren Abschnitts (141d) einen zu einem, der Arme (141e) des Halteorgans (141) gehörenden hohlzylindrischen, im Querschnitt zum Beispiel kreisförmigen Abschnitt hat, der ein zylindrisches, im Querschnitt zum Beispiel kreisförmiges Loch (142a) von einem gummielastischen Körper des beim betreffenden Arm (141e) angeordneten Dämpfungselements (142,172) durchdringt, wobei das Röhrchen vorzugsweise auf mindestens einer Seite des gummielastischen Körpers einen Wulst (141f, 141g) zum Halten des letzteren hat, und wobei jeder Wulst (141f, 141g) vorzugsweise durch plastisches Verformen gebildet ist.

9. Abgasanlage nach einem der Ansprüche 1 bis 8, **dadurch gekennzeichnet, dass** mindestens eines der Halteorgane (41) einen im Querschnitt U-förmigen Stab mit einem Steg (41a) und zwei Schenkeln (41b) besitzt und dass die zwei Schenkel (41b) dem Steg abgewandte Ränder (41c) haben, die entlang dem Auspuff (12) voneinander in Abstand stehen, am zugeordneten Verstärkungselement (50) und/oder an einem der Rohre (19, 21, 23) anliegen und durch Schweissen oder Hartlöten oder Kleben am Verstärkungselement (50) und/oder am Rohr (19, 21, 23) befestigt sind.

10. Abgasanlage nach einem der Ansprüche 1 bis 9, **dadurch gekennzeichnet, dass** das bzw. jedes Verstärkungselement (50, 150) aus einer einstückigen, entlang ihrem Umfang unterbruchslos zusammenhängenden, metallischen Hülse besteht.

11. Abgasanlage nach einem der Ansprüche 1 bis 10, **dadurch gekennzeichnet, dass** das Gehäuse (26) eine Gehäuseachse (28) und zwei einander abgewandte, mit der Gehäuseachse (28) einen Winkel bildende, mit einem Rohr (19, 21, 23) verbundene Endwände (26b) besitzt, dass ein entlang der Gehäuseachse (28) gemessener Abstand *b* von sich am nächsten beieinander befindenden Stellen von jeder Endwand (26b) und des sich in der Nähe von dieser befindenden, über ein Verstärkungselement (50, 150) oder direkt mit einem der Rohre (19, 21, 23) verbundenen Halteorgans (41, 141) höchstens 5 cm und vorzugsweise höchstens 3 cm beträgt.

12. Abgasanlage nach einem der Ansprüche 1 bis 11, **dadurch gekennzeichnet, dass** das bzw. jedes mit einem Verstärkungselement (50) versehene Rohr (19, 21, 23) und der Gehäuse-Mantel (26a) Materialdicken von höchstens 0,8 mm und zum Beispiel 0,5 mm bis 0,7 mm aufweisen.

13. Kraftfahrzeug mit einer Abgasanlage (11) nach einem der Ansprüche 1 bis 12, wobei das Kraftfahrzeug einen Fahrzeugkörper (2) und Räder (7, 8) besitzt, die in einer Normalstellung des Kraftfahrzeugs auf einer horizontalen Unterlage aufliegen, **dadurch gekennzeichnet, dass** die Haltemittel (30, 130) für das Gehäuse (26) bzw. für mindestens eines der Gehäuse (26) zwei diesem Gehäuse (26) zugeordnete Halteorgane (41, 141) aufweisen, die unterhalb von mit den Gehäuse-Enden (26d) des Gehäuses (26) verbundenen Rohren (19, 21) angeordnet und mit diesen Rohren (19, 21) verbunden sind und von denen mindestens eines mit dem bzw. einem Verstärkungselement (50, 150) versehen ist, und dass in der Normalstellung eine tiefste Stelle des Gehäuses (26) unter einer tiefsten Stelle der diesem Gehäuse (26) zugeordneten Halteorgane (41, 141) liegt.

14. Kraftfahrzeug nach Anspruch 13, **dadurch gekennzeichnet, dass** der Fahrzeugkörper (2) einen Fahrzeugboden (4) mit einem nach unten offenen Tunnel (4a) besitzt, in dem mindestens ein Querschnittsbereich des bzw. mindestens eines Gehäuses (26) angeordnet ist, dass jedes dem bzw. einem sich mindestens teilweise im Tunnel (4a) befindenden Gehäuse (26) zugeordnete, metallische Halteorgan (41, 141) vollständig im Tunnel (4a) angeordnet und durch mindestens teilweise gummielastische Dämpfungselemente (42, 142, 172) mit einem metallischen Verbindungselement (43) verbunden ist, das beidseitig des Tunnels (4a) am Fahrzeugboden (4) anliegt und befestigt ist.

15. Kraftfahrzeug nach Anspruch 13 oder 14, **dadurch gekennzeichnet, dass** die Dämpfungselemente (42, 142, 172) einen gummielastischen Körper aufweisen und mindestens eines der Halteorgane (41, 141) derart mit dem Verbindungselement (43, 143, 173) verbinden, dass in der Normalstellung die gummielastischen Körper der Dämpfungselemente (42) durch das Gewicht des Auspuffs (12) im Wesentlichen nur druckbelastet sind.

16. Verfahren zur Herstellung einer Abgasanlage (11) nach einem der Ansprüche 1 bis 12, **dadurch gekennzeichnet, dass** das bzw. jedes Verstärkungselement (50, 150) auf das bzw. ein Rohr (19, 21, 23) oder auf den Gehäuse-Mantel von dem bzw. einem der Gehäuse aufgebracht und durch Schweissen oder Hartlöten oder Kleben mit dem Halteorgan (41, 141) verbunden wird.

## Claims

1. Exhaust system (11) for a motor vehicle (1) having a vehicle body (2) and an internal combustion engine (6), comprising an exhaust (12) which is intended for connection to the internal combustion engine (6) and has at least one housing (26) of a silencer (20, 22) and/or catalytic converter with a housing casing (26a) having substantially a material thickness of not more than 1 mm, and two housing ends (26d) at least one of which is rigidly connected to a metallic pipe (19, 21, 23) having a material thickness of not more than 1 mm and intended for carrying the exhaust gas, and comprising retaining means (30, 130) for holding the exhaust (12) on the vehicle body (2), the retaining means (30, 130) having metallic retaining members (41, 141) connected to an exhaust part (19, 21, 23), **characterized in that** at least one of the retaining members (41, 141) is connected to a reinforcing element (50, 150) which is coordinated with said retaining member and at least approximately encloses the or a pipe (19, 21, 23) with a material thickness of not more than 1 mm or the housing casing cross-section and is fastened to the pipe (19, 21, 23) or housing casing.

2. Exhaust system according to Claim 1, **characterized in that** the or each reinforcing element (50) is connected by pressing on and/or welding and/or brazing and/or plastic deformation, for example crimping and/or bead formation, and/or adhesion to the pipe (19, 21, 23) or housing casing at least approximately enclosed by said reinforcing element.

3. Exhaust system according to Claim 1 or 2, **characterized in that** both housing ends (26d) are rigidly connected to a pipe (19, 21, 23), that the retaining means (30, 130) for each pipe (19, 21, 23) connected to a housing end have a metallic retaining member (41, 141), and that each retaining member (41, 141) is adjacent and fastened to a reinforcing element (50, 150) enclosing one of the pipes (19, 21, 23) and/or to one of the pipes (19, 21, 23), each housing casing (26a) preferably being free of retaining means engaging it.

4. Exhaust system according to any of Claims 1 to 3, **characterized in that** each retaining member (41, 141) is fastened by welding or brazing or adhesion to the coordinated reinforcing element (50, 150) and/or to one of the pipes (19, 21, 23).

5. Exhaust system according to any of Claims 1 to 4, **characterized in that** the or each retaining member (41, 141) has a middle section (41d, 141d) connected via a reinforcing element (50, 150) or directly to one of the pipes (19, 21, 23) or to the housing casing and has arms (41e, 141e) which project away from said section on sides facing away from one another and each of which is connected to an at least partly elastomeric damping element (42, 142, 172).

6. Exhaust system according to Claim 5, **characterized in that** each retaining member (41, 141) is connected by the damping element (42, 142, 172) to one and the same elongated, metallic connecting element (43, 143, 173) intended for rigid connection to the vehicle body (2), so that the retaining member (41, 141), the connecting element (43, 143, 173) and the damping elements (42, 142, 172) together form a holder (31, 32, 33, 34, 131, 132).

7. Exhaust system according to Claim 6, **characterized in that** the exhaust (12) defines an exhaust gas flow path and the holders (131, 132) comprise a first holder (131) along the flow path and at least one holder (132) following said first holder along the flow path, that the damping elements (142) of the first holder (131) connect the retaining member (141) nonpivotably to the connecting element (143) of the first holder (131), and that the damping elements (172) connect the retaining member (41) of the or each holder (132) following the first holder (131) pivotably to the connecting element (173) of the relevant holder (132) following the first holder (131).

8. Exhaust gas system according to any of Claims 5 to 7, **characterized in that** at least one of the retaining members (141) has a tube which forms that middle section (141d) of the retaining member (141) which is connected to the coordinated reinforcing element (150) and/or one of the pipes (19, 21, 23) and is fastened in the middle section (141d) by welding or brazing or adhesion to the reinforcing element (150) and/or to the pipe (19, 21, 23), and that the tube has, on both sides of the middle section (141d), a hollow cylindrical section which belongs to one of the arms (141e) of the retaining member (141) and, for example, is circular in cross-section and which passes through a cylindrical hole (142a) which, for example, is circular in cross-section and is present in an elastomeric body of the damping element (142, 172) arranged at the relevant arm (141e), the tube preferably having, on at least one side of the elastomeric body, a bead (141f, 141g) for holding the latter, and each bead (141f, 141g) preferably being formed by a plastic deformation.

9. Exhaust system according to any of Claims 1 to 8, **characterized in that** at least one of the retaining members (41) has a rod which is U-shaped in cross-section and has a web (41a) and two limbs (41b), and that the two limbs (41b) have edges (41c) which face away from the web and are a distance apart along the exhaust (12), rest against the coordinated reinforcing element (50) and/or against one of the pipes (19, 21, 23) and are fastened to the reinforcing element (50) and/or to the pipe (19, 21, 23) by welding or brazing or adhesion.

10. Exhaust system according to any of Claims 1 to 9, **characterized in that** the or each reinforcing element (50, 150) consists of a one-piece, metallic sleeve which is continuous along its circumference.

11. Exhaust system according to any of Claims 1 to 10, **characterized in that** the housing (26) has a housing axis (28) and two end walls (26b) which face away from one another, make an angle with the housing axis (28) and are connected to a pipe (19, 21, 23), and that a spacing b, measured along the housing axis (28), of those points of each end wall (26b) which are closest to one another and of the retaining member (41, 141) present in the vicinity thereof and connected via a reinforcing element (50, 150) or directly to one of the pipes (19, 21, 23) is not more than 5 cm and preferably not more than 3 cm.

12. Exhaust system according to any of Claims 1 to 11, **characterized in that** the or each pipe (19, 21, 23) provided with a reinforcing element (50), and the housing casing (26a), have material thicknesses of not more than 0.8 mm and, for example, 0.5 mm to 0.7 mm.

13. Motor vehicle having an exhaust system (11) according to any of Claims 1 to 12, the motor vehicle having a vehicle body (2) and wheels (7, 8) which rest on a horizontal surface when the motor vehicle is in a normal position, **characterized in that** the retaining means (30, 130) for the housing (26) or for at least one of the housings (26) have two retaining members (41, 141) which are coordinated with this housing (26) and are arranged below pipes (19, 21) connected to the housing ends (26d) of the housing (26) and are connected to these pipes (19, 21), and at least one of which is provided with the or a reinforcing element (50, 150), and that, in the normal position, a lowest point of the housing (26) is below a lowest point of the retaining members (41, 141) coordinated with this housing (26).

14. Motor vehicle according to Claim 13, **characterized in that** the vehicle body (2) has a vehicle bottom (4) having a tunnel (4a) which is open at the bottom and in which at least one cross-sectional area of the housing (26) or at least one housing (26) is arranged, and that each metallic retaining member (41, 141) coordinated with the or with a housing (26) present at least partly in the tunnel (4a) is arranged completely in the tunnel (4a) and is connected by at least partly elastomeric damping elements (42, 142, 172) to a metallic connecting element (43) which rests on and is fastened to the vehicle bottom (4) on both sides of the tunnel (4a).

15. Motor vehicle according to Claim 13 or 14, **characterized in that** the damping elements (42, 142, 172) have an elastomeric body, and at least one of the retaining members (41, 141) is connected to the connecting element (43, 143, 173) in such a way that, in the normal position, the elastomeric bodies of the damping elements (42) are subjected substantially only to a pressure load by the weight of the exhaust (12).

16. Method for the production of an exhaust system (11) according to any of Claims 1 to 12, **characterized in that** the or each reinforcing element (50, 150) is mounted on the or a pipe (19, 21, 23) or on the housing casing of the housing or one of the housings and is connected by welding or brazing or adhesion to the retaining member (41, 141).

## Revendications

1. Système d'échappement (11) pour un véhicule automobile (1) présentant un corps de véhicule (2) et un moteur à combustion interne (6), avec un échappement (12) destiné à être relié au moteur à combustion interne (6) et présentant au moins un boîtier (26) d'un silencieux (20, 22) et/ou d'un catalyseur qui est doté d'une enveloppe de boîtier (26a) ayant pour l'essentiel une épaisseur de matériau d'au plus 1 mm, ainsi que deux extrémités de boîtier (26d) dont au moins une est rigidement reliée à un tuyau métallique (19, 21, 23) ayant une épaisseur de matériau d'au plus 1 mm et destiné à conduire les gaz d'échappement, et avec des moyens de maintien (30, 130) pour maintenir l'échappement (12) sur le corps de véhicule (2), les moyens de maintien (30, 130) présentant des organes de maintien métalliques (41, 141) reliés à une partie d'échappement (19, 21, 23), **caractérisé en ce qu'**au moins un des organes de maintien (41, 141) est relié à un élément de renforcement (50, 150) qui lui est associé, élément qui enserre au moins approximativement, en coupe transversale, le ou un tuyau (19, 21, 23) ayant une épaisseur de matériau d'au plus 1 mm ou l'enveloppe de boîtier, et qui est fixé sur le tuyau (19, 21, 23) ou l'enveloppe de boîtier.

2. Système d'échappement selon la revendication 1, **caractérisé en ce que** le ou chaque élément de renforcement (50) est assemblé au tuyau (19, 21, 23) ou à l'enveloppe de boîtier, qu'il enserre au moins approximativement, par emmanchement et/ou par soudage et/ou par brasage fort et/ou par déformation plastique, par exemple par sertissage crimp et/ou par jonc, et/ou par collage.

3. Système d'échappement selon la revendication 1 ou 2, **caractérisé en ce que** les deux extrémités de boîtier (26d) sont rigidement reliées à un tuyau (19, 21, 23), **en ce que** les moyens de maintien (30, 130) présentent un organe de maintien métallique (41, 141) pour chaque tuyau (19, 21, 23) relié à une extrémité de boîtier, et **en ce que** chaque organe de maintien (41, 141) s'applique et est fixé sur un élément de renforcement (50, 150) enserrant un des tuyaux (19, 21, 23) et/ou sur un des tuyaux (19, 21, 23), chaque enveloppe de boîtier (26a) étant de préférence libre de moyens de maintien agissant sur elle.

4. Système d'échappement selon l'une des revendications 1 à 3, **caractérisé en ce que** chaque organe de maintien (41, 141) est fixé sur l'élément de renforcement associé (50, 150) et/ou sur un des tuyaux (19, 21, 23) par soudage ou brasage fort ou collage.

5. Système d'échappement selon l'une des revendications 1 à 4, **caractérisé en ce que** le ou chaque organe de maintien (41, 141) présente une partie médiane (41d, 141d) reliée à un des tuyaux (19, 21, 23) ou à l'enveloppe de boîtier directement ou par l'intermédiaire d'un élément de renforcement (50, 150), et présente des bras (41e, 141e) qui partent en saillie de cette partie médiane sur des côtés mutuellement opposés et qui sont chacun reliés à un élément d'amortissement (42, 142, 172) au moins partiellement caoutchouteux.

6. Système d'échappement selon la revendication 5, **caractérisé en ce que** chaque organe de maintien (41, 141) est relié par les éléments d'amortissement (42, 142, 172) à un seul et même élément de liaison (43, 143, 173) métallique et oblong, destiné à la liaison rigide avec le corps de véhicule (2), de sorte que l'organe de maintien (41, 141), l'élément de liaison (43, 143, 173) et les éléments d'amortissement (42, 142, 172) forment conjointement un support (31, 32, 33, 34, 131, 132).

7. Système d'échappement selon la revendication 6, **caractérisé en ce que** l'échappement (12) définit un chemin d'écoulement des gaz d'échappement et les supports (131, 132) présentent un premier support (131) le long du chemin d'écoulement et un au moins un support (132) faisant suite au premier support le long du chemin d'écoulement, **en ce que** les éléments d'amortissement (142) du premier support (131) relient l'organe de maintien (141) sans possibilité de pivotement à l'élément de liaison (143) du premier support (131), et **en ce que** les éléments d'amortissement (172) relient avec possibilité de pivotement l'organe de maintien (41), du ou de chaque support (132) faisant suite au premier support (131), à l'élément de liaison (173) du support (132) concerné faisant suite au premier support (131).

8. Système d'échappement selon l'une des revendications 5 à 7, **caractérisé en ce qu'**au moins un des organes de maintien (141) présente une tubulure qui forme la partie médiane (141d) de l'organe de maintien (141) reliée à l'élément de renforcement associé (150) et/ou à un des tuyaux (19, 21, 23), et qui est fixée par la partie médiane (141d), par soudage ou brasage fort ou collage, sur l'élément de renforcement (150) et/ou sur le tuyau (19, 21, 23), et **en ce que** la tubulure possède, de part et d'autre de la partie médiane (141d), une partie cylindrique creuse, par exemple de section circulaire, qui fait partie d'un des bras (141e) de l'organe de maintien (141) et qui traverse un perçage cylindrique (142a), par exemple de section circulaire, d'un corps caoutchouteux de l'élément d'amortissement (142, 172) disposé pour le bras concerné (141e), la tubulure possédant de préférence, sur au moins un côté du corps caoutchouteux, un bourrelet (141f, 141g) pour maintenir ce dernier, et chaque bourrelet (141f, 141g) étant de préférence formé par déformation plastique.

9. Système d'échappement selon l'une des revendications 1 à 8, **caractérisé en ce qu'**au moins un des organes de maintien (41) possède une barre à section en U avec un dos de U (41a) et deux branches (41b), et **en ce que** les deux branches (41b) possèdent des bords (41c) opposés au dos du U, qui sont mutuellement distants le long de l'échappement (12), s'appliquent contre l'élément de renforcement associé (50) et/ou contre un des tuyaux (19, 21, 23), et sont fixés par soudage ou brasage fort ou collage sur l'élément de renforcement (50) et/ou sur le tuyau (19, 21, 23).

10. Système d'échappement selon l'une des revendications 1 à 9, **caractérisé en ce que** le ou chaque élément de renforcement (50, 150) est constitué d'un manchon métallique d'un seul tenant, continu sans interruption le long de sa circonférence.

11. Système d'échappement selon l'une des revendications 1 à 10, **caractérisé en ce que** le boîtier (26) possède un axe de boîtier (28) et deux parois terminales (26b) mutuellement opposées, formant un angle avec l'axe de boîtier (28) et reliées à un tuyau (19, 21, 23), et **en ce qu'**une distance *b*, mesurée le long de l'axe de boîtier (28), entre les points les plus proches l'un de l'autre de chaque paroi terminale (26b) et de l'organe de maintien (41, 141) qui se trouve à proximité de cette paroi terminale et qui est relié à un des tuyaux (19, 21, 23) directement ou par l'intermédiaire d'un élément de renforcement (50, 150), est égale au plus à 5 cm et de préférence au plus à 3 cm.

12. Système d'échappement selon l'une des revendications 1 à 11, **caractérisé en ce que** le ou chaque tuyau (19, 21, 23) pourvu d'un élément de renforcement (50) et l'enveloppe de boîtier (26a) présentent des épaisseurs de matériau d'au plus 0,8 mm et par exemple de 0,5 mm à 0,7 mm.

13. Véhicule automobile avec un système d'échappement (11) selon l'une des revendications 1 à 12, le véhicule automobile possédant un corps de véhicule (2) et des roues (7, 8) qui, dans une position normale du véhicule automobile, reposent sur une surface d'appui horizontale, **caractérisé en ce que** les moyens de maintien (30, 130) pour le boîtier (26) ou pour au moins un des boîtiers (26) présentent deux organes de maintien (41, 141) associés à ce boîtier (26), qui sont disposés en dessous de tuyaux (19, 21) reliés aux extrémités (26d) du boîtier (26) et qui sont reliés à ces tuyaux (19, 21), et dont au moins un est pourvu du ou d'un élément de renforcement (50, 150), et **en ce que**, dans la position normale, le point le plus bas du boîtier (26) se situe en dessous du point le plus bas des organes de maintien (41, 141) associés à ce boîtier (26).

14. Véhicule automobile selon la revendication 13, **caractérisé en ce que** le corps de véhicule (2) possède un plancher de véhicule (4) avec un tunnel (4a) ouvert vers le bas dans lequel est disposée au moins une région de la section du boîtier (26) ou d'au moins un boîtier (26), et **en ce que** chaque organe de maintien métallique (41, 141) associé au ou à un boîtier (26) se trouvant au moins partiellement dans le tunnel (4a) est disposé entièrement dans le tunnel (4a) et est relié, par des éléments d'amortissement (42, 142, 172) au moins partiellement caoutchouteux, à un élément de liaison métallique (43) qui s'applique et est fixé sur le plancher de véhicule (4) de part et d'autre du tunnel (4a).

15. Véhicule automobile selon la revendication 13 ou 14, **caractérisé en ce que** les éléments d'amortissement (42, 142, 172) présentent un corps caoutchouteux et relient au moins un des organes de maintien (41, 141) à l'élément de liaison (43, 143, 173) de telle sorte que, dans la position normale, les corps caoutchouteux des éléments d'amortissement (42) sont sollicités pour l'essentiel uniquement en compression par le poids de l'échappement (12).

16. Procédé de fabrication d'un système d'échappement (11) selon l'une des revendications 1 à 12, **caractérisé en ce que** le ou chaque élément de renforcement (50, 150) est apposé sur le ou un tuyau (19, 21, 23) ou sur l'enveloppe du boîtier ou d'un des boîtiers, et est relié à l'organe de maintien (41, 141) par soudage ou brasage fort ou collage.
